# EUROPEAN PATENT SPECIFICATION

(11) **EP 4 213 553 B1**
(45) Date of publication and mention of the grant of the patent: **15.07.2026**
(21) Application number: 20953251.4
(22) Date of filing: 09.09.2020
(51) Int. Cl.: H04W 72/02, H04W 92/18, H04W 72/54, H04W 72/11

(54) **TERMINAL AND COMMUNICATION METHOD**
ENDGERÄT UND KOMMUNIKATIONSVERFAHREN
TERMINAL ET PROCÉDÉ DE COMMUNICATION

(43) Date of publication of application: 19.07.2023
(73) Proprietor: NTT DOCOMO, INC., Tokyo 100-6150 (JP)
(72) Inventor: YOSHIOKA, Shohei, Tokyo 100-6150 (JP); SHIBAIKE, Naoya, Tokyo 100-6150 (JP); NAGATA, Satoshi, Tokyo 100-6150 (JP)
(74) Representative: Hoffmann Eitle
(86) International application number: PCT/JP2020/034205
(87) International publication number: WO 2022/054185

(56) References cited:
- WO-A1-2020/088678
- JP-A- 2019 531 653
- JP-A- 2020 092 454
- US-A1- 2019 132 832
- US-A1- 2021 258 921
- SAMSUNG: "On Mode 2 for NR Sidelink", vol. RAN WG1, no. e-Meeting; 20200817 - 20200828, 7 August 2020 (2020-08-07), XP052347475, Retrieved from the Internet <URL:https://ftp.3gpp.org/tsg_ran/WG1_RL1/TSGR1_102-e/Docs/R1-2006101.zip R1-2006101.docx> [retrieved on 20200807]
- ERICSSON: "Resource allocation mechanisms for power saving", vol. RAN WG1, no. e-Meeting; 20200817 - 20200828, 7 August 2020 (2020-08-07), XP052347817, Retrieved from the Internet <URL:https://ftp.3gpp.org/tsg_ran/WG1_RL1/TSGR1_102-e/Docs/R1-2006444.zip R1-2006444 Ericsson - Resource allocation mechanisms for power saving.docx> [retrieved on 20200807]
- SAMSUNG: "On Resource Allocation for NR V2X Mode 2", vol. RAN WG1, no. Chongqing, China; 20191014 - 20191020, 8 October 2019 (2019-10-08), XP051809129, Retrieved from the Internet <URL:https://ftp.3gpp.org/tsg_ran/WG1_RL1/TSGR1_98b/Docs/R1-1910471.zip R1-1910471.docx> [retrieved on 20191008]

## Description

### TECHNICAL FIELD

The present invention relates to a terminal and a communication method in a radio communication system.

### BACKGROUND ART

In long term evolution (LTE) and the successor system of LTE (for example, LTE advanced (LTE-A) and new radio (NR) (also referred to as 5G)), a device to device (D2D) technology has been discussed in which terminals perform direct communication with each other without using a base station (for example, Non-Patent Document 1).

D2D reduces traffic between the terminal and the base station, and enables communication between the terminals even when the base station is in a state where communication is not available during a disaster. Note that, in a 3rd generation partnership project (3GPP), D2D is referred to as a "sidelink", but herein, the more general term D2D is used. Here, in the description of the following embodiment, the sidelink is also used as necessary.

The D2D communication is classified broadly into D2D discovery for discovering other terminals that are capable of performing communication and D2D communication for performing direct communication between terminals (also referred to as D2D direct communication, terminal-to-terminal direct communication, and the like). Hereinafter, when the D2D communication, the D2D discovery, and the like are not particularly distinguished from each other, the D2D communication, the D2D discovery, and the like will be simply referred to as D2D. In addition, a signal to be transmitted and received in D2D will be referred to as a D2D signal. Various use cases of a service according to vehicle to everything (V2X) in NR have been discussed (for example, Non-Patent Document 2).

WO 2020/088678 A1 discloses a communication method which includes: a first terminal device determines a first parameter, where the first parameter is used to indicate a parameter of a sensing window, a parameter of a resource selection window, and/or a parameter of a first time window, and the first time window includes the sensing window and the resource selection window. The first terminal device determines a first resource pool from at least one resource pool based on the first parameter. The first terminal device selects a first resource from the first resource pool. The first terminal device transmits sidelink information on the first resource.

### CITATION LIST

### NON-PATENT DOCUMENT

Non-Patent Document 1: 3GPP TS 38.211 V16.2.0 (2020-06)
Non-Patent Document 2: 3GPP TR 22.886 V15.1.0 (2017-03)

### SUMMARY OF THE INVENTION

### PROBLEM TO BE SOLVED BY THE INVENTION

Power saving has been discussed as the enhancement of an NR sidelink. For example, in a resource allocation mode 2 where a terminal autonomously selects a resource, the terminal executes partial sensing in which sensing is performed with respect to limited resources in a sensing window, and based on results thereof, selects available resource candidates from a resource selection window.

On the other hand, in a periodic resource reservation in the NR sidelink, compared to LTE, the shortest configurable periodicity is shorter and more various periodic resource reservations are available, and thus, it is necessary to perform the sensing with respect to many resources, which hinders a power-saving operation.

The invention has been made in view of the points described above, and an object thereof is to efficiently detect the transmission of another terminal, in terminal-to-terminal direct communication.

### MEANS FOR SOLVING PROBLEM

The invention is set out in the appended set of claims.

### EFFECT OF THE INVENTION

According to the disclosed technology, it is possible to efficiently detect the transmission of another terminal, in terminal-to-terminal direct communication.

### BRIEF DESCRIPTION OF DRAWINGS

[Fig. 1] Fig. 1 is a diagram illustrating V2X;
[Fig. 2] Fig. 2 is a diagram illustrating Example (1) of a transmission mode of V2X;
[Fig. 3] Fig. 3 is a diagram illustrating Example (2) of the transmission mode of V2X;
[Fig. 4] Fig. 4 is a diagram illustrating Example (3) of the transmission mode of V2X;
[Fig. 5] Fig. 5 is a diagram illustrating Example (4) of the transmission mode of V2X;
[Fig. 6] Fig. 6 is a diagram illustrating Example (5) of the transmission mode of V2X;
[Fig. 7] Fig. 7 is a diagram illustrating Example (1) of a communication type of V2X;
[Fig. 8] Fig. 8 is a diagram illustrating Example (2) of the communication type of V2X;
[Fig. 9] Fig. 9 is a diagram illustrating Example (3) of the communication type of V2X;
[Fig. 10] Fig. 10 is a sequence diagram illustrating Operation Example (1) of V2X;
[Fig. 11] Fig. 11 is a sequence diagram illustrating Operation Example (2) of V2X;
[Fig. 12] Fig. 12 is a sequence diagram illustrating Operation Example (3) of V2X;
[Fig. 13] Fig. 13 is a sequence diagram illustrating Operation Example (4) of V2X;
[Fig. 14] Fig. 14 is a diagram illustrating an example of a sensing operation;
[Fig. 15] Fig. 15 is a diagram illustrating an example of a partial sensing operation;
[Fig. 16] Fig. 16 is a diagram illustrating Example (1) of a sensing operation in an embodiment of the invention;
[Fig. 17] Fig. 17 is a diagram illustrating Example (2) of the sensing operation in the embodiment of the invention;
[Fig. 18] Fig. 18 is a diagram illustrating an example of a function structure of a base station 10 in the embodiment of the invention;
[Fig. 19] Fig. 19 is a diagram illustrating an example of a function structure of a terminal 20 in the embodiment of the invention; and
[Fig. 20] Fig. 20 is a diagram illustrating an example of a hardware structure of the base station 10 or the terminal 20 in the embodiment of the invention.

### MODE(S) FOR CARRYING OUT THE INVENTION

Hereinafter, an embodiment of the invention will be described with reference to the drawings. Note that, the embodiment described below is an example, and an embodiment to which the invention is applied is not limited to the following embodiment.

In the operation of a radio communication system of the embodiment of the invention, the conventional technology is suitably used. However, the conventional technology, for example, is the conventional LTE, but is not limited to the conventional LTE. In addition, the term "LTE" used herein has a broad meaning including LTE-advanced and a scheme subsequent to the LTE-advanced (for example, NR), or a wireless local area network (LAN), unless otherwise noted.

In addition, in the embodiment of the invention, a duplex may be a time division duplex (TDD), may be a frequency division duplex (FDD), or may be other schemes (for example, a flexible duplex or the like).

In addition, in the embodiment of the invention, "configuring" a radio parameter or the like may mean pre-configuring a predetermined value, or may be configuring a radio parameter that is indicated by a base station 10 or a terminal 20.

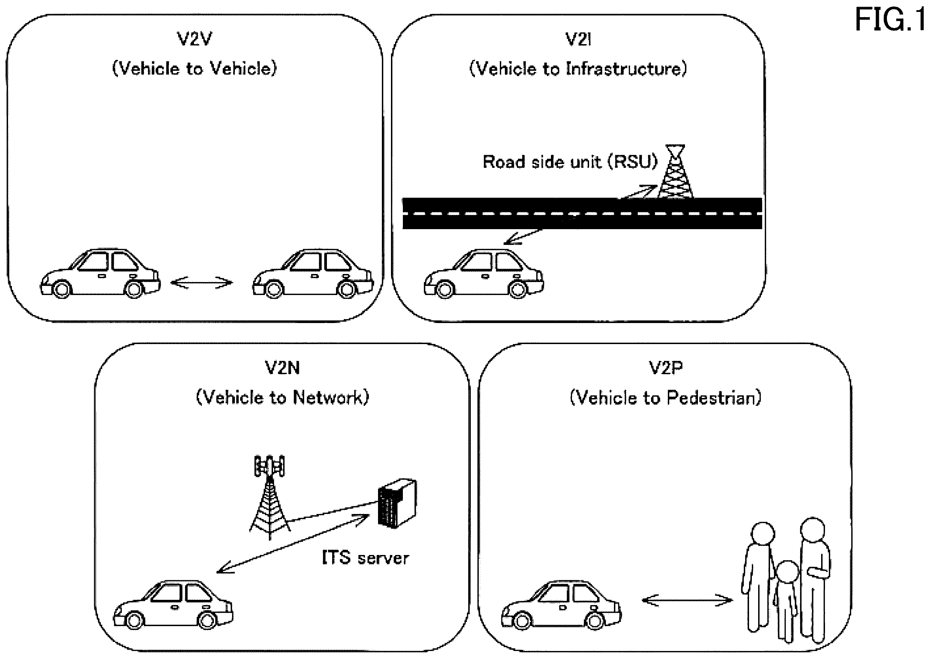

Fig. 1 is a diagram illustrating V2X. In 3GPP, it is discussed to implement vehicle to everything (V2X) or enhanced V2X (eV2X) by extending a D2D function, and the development of specifications thereof has progressed. As illustrated in Fig. 1, V2X is a part of intelligent transport systems (ITS), and is a generic term for: vehicle to vehicle (V2V) indicating a communication mode that is performed between vehicles; vehicle to infrastructure (V2I) indicating a communication mode that is performed between a vehicle and a road-side unit (RSU) to be provided on a roadside; vehicle to network (V2N) indicating a communication mode that is performed between a vehicle and an ITS server; and vehicle to pedestrian (V2P) indicating a communication mode that is performed between a vehicle and a mobile terminal carried by a pedestrian.

In addition, in 3GPP, V2X using cellular communication and terminal-to-terminal communication of LTE or NR have been discussed. V2X using cellular communication is also referred to as cellular V2X. In V2X of NR, discussions are being held to achieve high capacity, low latency, high reliability, and quality of service (QoS) control.

Regarding V2X of LTE or NR, it is expected that discussions not limited to the 3GPP specification development will be held in the future. For example, it is expected that discussions will be held regarding: ensuring interoperability; reducing cost by implementing higher layers; a method for using together or switching a plurality of radio access technologies (RAT); regulation support in each country; data acquisition and delivering of a V2X platform of LTE or NR; and database management and a use method thereof.

In the embodiment of the invention, it is mainly expected that a communication unit is mounted on a vehicle, but the embodiment of the invention is not limited thereto. For example, the communication unit may be a terminal that is carried by a person, the communication unit may be a device that is mounted on a drone or an air craft, or the communication unit may be a base station, RSU, a relay station (relay node), a terminal having scheduling capability, and the like.

Note that, a sidelink (SL) may be distinguished from an uplink (UL) or a downlink (DL), based on one of the following 1) to 4) or a combination thereof. In addition, SL may be referred to by another name.
1) Resource arrangement in the time domain
2) Resource arrangement in the frequency domain
3) A synchronization signal to be referred to (including sidelink synchronization signal (SLSS))
4) A reference signal to be used in path-loss measurement for transmission power control

In addition, regarding orthogonal frequency division multiplexing (OFDM) of SL or UL, any of cyclic-prefix OFDM (CP-OFDM), Discrete Fourier Transform-Spread-OFDM (DFT-S-OFDM), OFDM without transform precoding, and OFDM with transform precoding may be applied.

In SL of LTE, regarding resource allocation of SL with respect to the terminal 20, Mode 3 and Mode 4 are defined. In Mode 3, a transmission resource is more dynamically allocated by downlink control information (DCI) that is transmitted from the base station 10 to the terminal 20. In addition, in Mode 3, semi-persistent scheduling (SPS) can be performed. In Mode 4, the terminal 20 autonomously selects the transmission resource from a resource pool.

Note that, a slot in the embodiment of the invention may be replaced with a symbol, a mini slot, a subframe, a radio frame, and a transmission time interval (TTI). In addition, a cell in the embodiment of the invention may be replaced with a cell group, a carrier component, BWP, a resource pool, a resource, a radio access technology (RAT), a system (including a radio LAN), and the like.

Note that, in the embodiment of the invention, the terminal 20 is not limited to a V2X terminal, and may be all types of terminals that perform D2D communication. For example, the terminal 20 may be a terminal that is carried by a user, such as a smart phone, or may be an internet of things (IoT) device such as a smart meter.

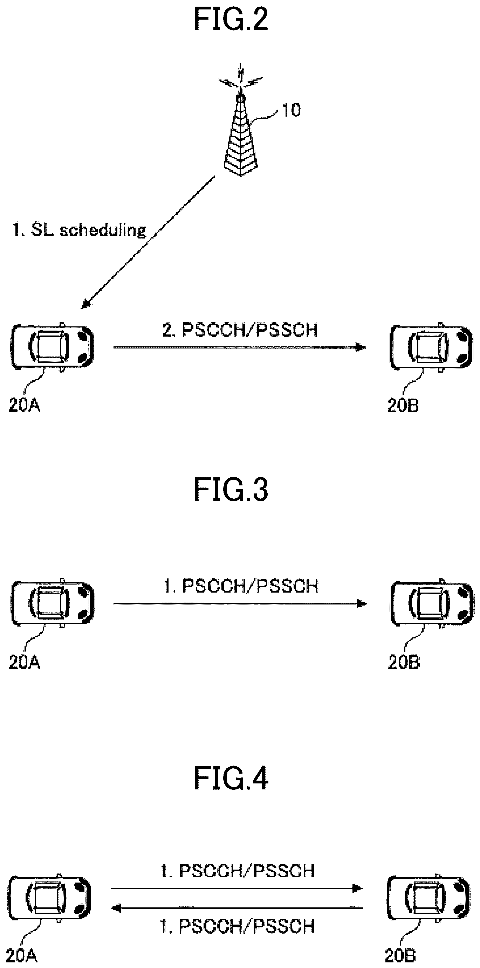

Fig. 2 is a diagram illustrating Example (1) of a transmission mode of V2X. In the transmission mode of the sidelink communication illustrated in Fig. 2, in Step 1, the base station 10 transmits sidelink scheduling to a terminal 20A. Subsequently, the terminal 20A transmits a physical sidelink control channel (PSCCH) and a physical sidelink shared channel (PSSCH) to a terminal 20B, based on the received scheduling (Step 2). The transmission mode of the sidelink communication illustrated in Fig. 2 may be referred to as a sidelink transmission mode 3 in LTE. In the sidelink transmission mode 3 in LTE, Uu based sidelink scheduling is performed. Uu is a radio interface between a universal terrestrial radio access network (UTRAN) and a user equipment (UE). Note that, the transmission mode of the sidelink communication illustrated in Fig. 2 may be referred to as a sidelink transmission mode 1 in NR.

Fig. 3 is a diagram illustrating Example (2) of the transmission mode of V2X. In the transmission mode of the sidelink communication illustrated in Fig. 3, in Step 1, the terminal 20A transmits PSCCH and PSSCH to the terminal 20B by using the autonomously selected resource. The transmission mode of the sidelink communication illustrated in Fig. 3 may be referred to as a sidelink transmission mode 4 in LTE. In the sidelink transmission mode 4 in LTE, the UE itself executes resource selection.

Fig. 4 is a diagram illustrating Example (3) of the transmission mode of V2X. In the transmission mode of the sidelink communication illustrated in Fig. 4, in Step 1, the terminal 20A transmits PSCCH and PSSCH to the terminal 20B by using the autonomously selected resource. Similarly, the terminal 20B transmits PSCCH and PSSCH to the terminal 20A by using the autonomously selected resource (Step 1). The transmission mode of the sidelink communication illustrated in Fig. 4 may be referred to as a sidelink transmission mode 2a in NR. In the sidelink transmission mode 2 in NR, the terminal 20 itself executes the resource selection.

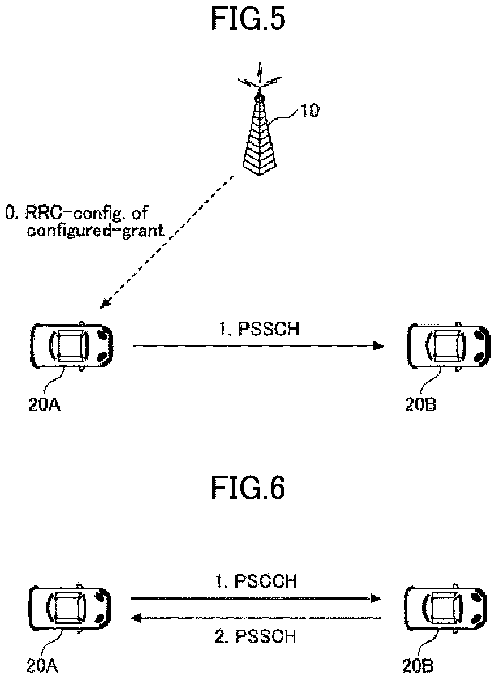

Fig. 5 is a diagram illustrating Example (4) of the transmission mode of V2X. In the transmission mode of the sidelink communication illustrated in Fig. 5, in Step 0, the base station 10 transmits the grant of the sidelink to the terminal 20A through radio resource control (RRC) configuration. Subsequently, the terminal 20A transmits PSSCH to the terminal 20B, based on the received resource pattern (Step 1). The transmission mode of the sidelink communication illustrated in Fig. 5 may be referred to as a sidelink transmission mode 2c in NR.

Fig. 6 is a diagram illustrating Example (5) of the transmission mode of V2X. In the transmission mode of the sidelink communication illustrated in Fig. 6, in Step 1, the terminal 20A transmits the sidelink scheduling to the terminal 20B through PSCCH. Subsequently, the terminal 20B transmits the PSSCH to the terminal 20A, based on the received scheduling (Step 2). The transmission mode of the sidelink communication illustrated in Fig. 6 may be referred to as a sidelink transmission mode 2d in NR.

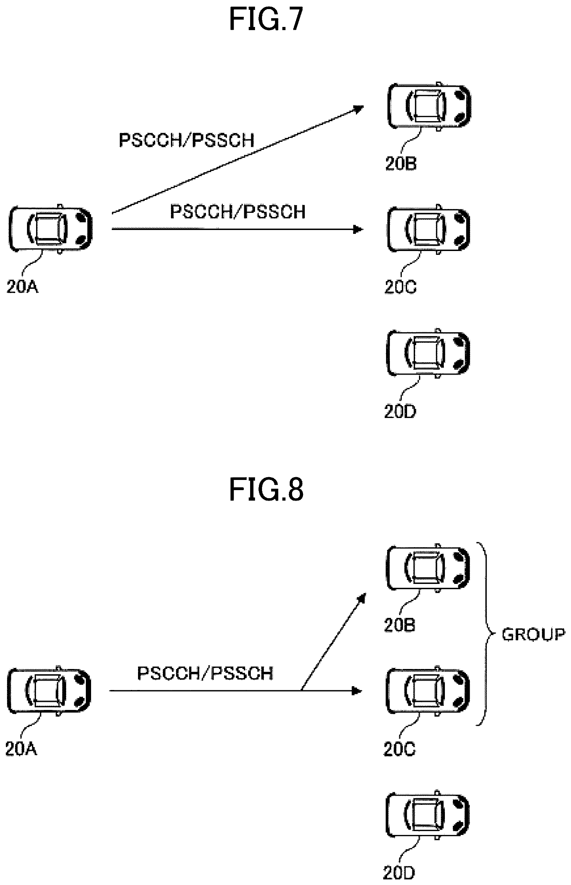

Fig. 7 is a diagram illustrating Example (1) of a communication type of V2X. The communication type of the sidelink illustrated in Fig. 7 is unicast. The terminal 20A transmits PSCCH and PSSCH to the terminal 20. In the example illustrated in Fig. 7, the terminal 20A performs unicast with respect to the terminal 20B, and performs unicast with respect to a terminal 20C.

Fig. 8 is a diagram illustrating Example (2) of the communication type of V2X. The communication type of the sidelink illustrated in Fig. 8 is groupcast. The terminal 20A transmits PSCCH and PSSCH to a group to which one or a plurality of terminals 20 belong. In the example illustrated in Fig. 8, the group includes the terminal 20B and the terminal 20C, and the terminal 20A performs groupcast with respect to the group.

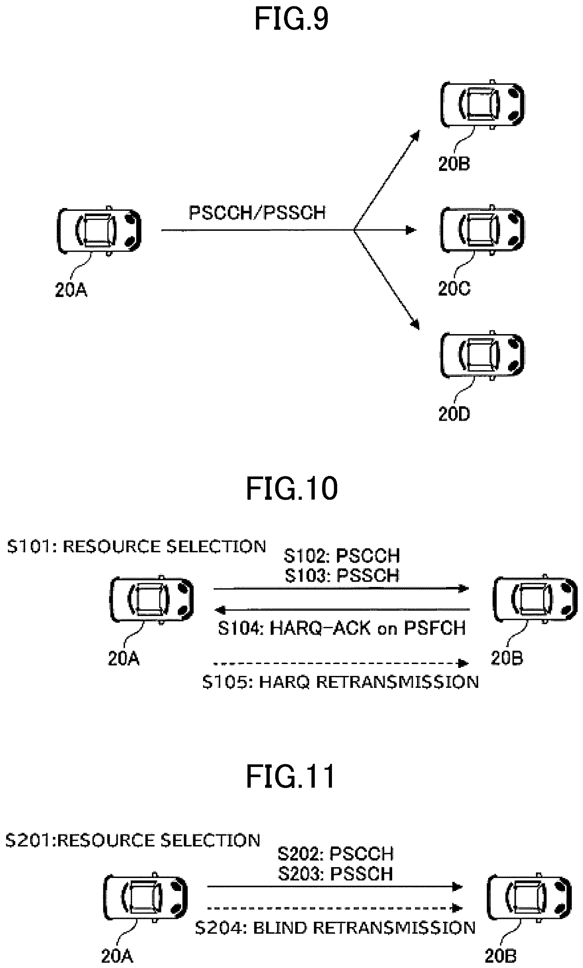

Fig. 9 is a diagram illustrating Example (3) of the communication type of V2X. The communication type of the sidelink illustrated in Fig. 9 is broadcast. The terminal 20A transmits PSCCH and PSSCH to one or a plurality of terminals 20. In the example illustrated in Fig. 9, the terminal 20A performs broadcast with respect to the terminal 20B, the terminal 20C, and a terminal 20D. Note that, the terminal 20A illustrated in Fig. 7 to Fig. 9 may be referred to as a header-UE.

In addition, in NR-V2X, it is expected that a hybrid automatic repeat request (HARQ) is supported by the unicast and the groupcast of the sidelink. Further, in NR-V2X, sidelink feedback control information (SFCI) including a HARQ response is defined. Further, it is discussed that SFCI is transmitted through a physical sidelink feedback channel (PSFCH).

Note that, in the following description, in the transmission of HARQ-ACK in the sidelink, PSFCH is used, which is an example. For example, the transmission of HARQ-ACK in the sidelink may be performed by using PSCCH, the transmission of HARQ-ACK in the sidelink may be performed by using PSSCH, or the transmission of HARQ-ACK in the sidelink may be performed by using another channel.

Hereinafter, for convenience sake, the overall information that is reported by the terminal 20 in HARQ will be referred to as HARQ-ACK. Such HARQ-ACK may be referred to as HARQ-ACK information. In addition, more specifically, a codebook to be applied to the HARQ-ACK information that is reported to the base station 10 and the like from the terminal 20 will be referred to as a HARQ-ACK codebook. The HARQ-ACK codebook defines a bit sequence of the HARQ-ACK information. Note that, not only ACK but also NACK are transmitted by "HARQ-ACK".

Fig. 10 is a sequence diagram illustrating Operation Example (1) of V2X. As illustrated in Fig. 10, the radio communication system according to the embodiment of the invention may include the terminal 20A and the terminal 20B. Note that, in practice, there are a plurality of user equipment, and, as the example of Fig. 10, the terminal 20A and the terminal 20B are illustrated.

Hereinafter, when the terminals 20A and 20B, and the like are not particularly distinguished from each other, the terminals 20A and 20B, and the like will be simply described as the "terminal 20" or the "user equipment". In Fig. 10, as an example, a case where both the terminal 20A and the terminal 20B are within the coverage of the cell is illustrated, but the operation of the embodiment of the invention can also be applied to a case where the terminal 20B is out of the coverage.

As described above, in this embodiment, the terminal 20, for example, is a device mounted on a vehicle such as an automobile, and has a cellular communication function and a sidelink function as UE in LTE or NR. The terminal 20 may be a typical portable terminal (a smart phone and the like). In addition, the terminal 20 may be RSU. RSU described above may be UE type RSU having the function of UE, or may be gNB type RSU having the function of a base station device.

Note that, it is not necessary that the terminal 20 is to be a device with one housing, and for example, even in a case where various sensors are dispersedly arranged in a vehicle, a device including the various sensors may be the terminal 20.

In addition, processing details of the transmission data of the sidelink of the terminal 20 are basically identical to processing details of UL transmission in LTE or NR. For example, the terminal 20 scrambles and modulates a codeword of transmission data to generate complex-valued symbols, maps the complex-valued symbols (transmission signals) to one or two layers, and performs precoding. Then, the terminal 20 maps the precoded complex-valued symbols to a resource element to generate a transmission signal (Example: a complex-valued time-domain SC-FDMA signal), and transmits the transmission signal from each antenna port.

Note that, the base station 10 has a cellular communication function as a base station in LTE or NR, and a function of enabling the communication of the terminal 20 in this embodiment (Example: resource pool configuration, resource allocation, and the like). In addition, the base station 10 may be RSU (gNB type RSU).

In addition, in the radio communication system according to the embodiment of the invention, a signal waveform that is used by the terminal 20 in SL or UL may be OFDMA, may be SC-FDMA, or may be other signal waveforms.

In Step S101, the terminal 20A autonomously selects a resource that is used in PSCCH and PSSCH from a resource selection window having a predetermined period. The resource selection window may be configured in the terminal 20 by the base station 10. Here, regarding the predetermined period of the resource selection window, for example, the period may be defined by an implementation condition of the terminal, such as a processing time or a maximum allowable packet latency time, or the period may be defined in advance by the technical specification, and the predetermined period may be referred to as a section period in the time domain.

In Step S102 and Step S103, the terminal 20A transmits sidelink control information (SCI) via PSCCH and/or PSSCH, and transmits SL data via PSSCH, using the resource autonomously selected in Step S101. For example, the terminal 20A may transmit PSCCH with a time resource that is same as at least a part of the time resource of PSSCH, using a frequency resource adjacent to a frequency resource of PSSCH.

The terminal 20B receives SCI (PSCCH and/or PSSCH) and the SL data (PSSCH) transmitted from the terminal 20A. The received SCI may include the information of the resource of PSFCH for the terminal 20B to transmit HARQ-ACK corresponding to the reception of the data. The terminal 20A may include the information of the autonomously selected resource in SCI to transmit the information.

In Step S104, the terminal 20B transmits HARQ-ACK corresponding to the received data to the terminal 20A by using the resource of PSFCH determined from the received SCI.

In Step S105, in a case where HARQ-ACK received in Step S104 indicates that retransmission is requested, that is, in a case where it is a negative response (NACK), the terminal 20A retransmits PSCCH and PSSCH to the terminal 20B. The terminal 20A may retransmit PSCCH and PSSCH by using the autonomously selected resource.

Note that, in a case where HARQ control with HARQ feedback is not executed, Step S104 and Step S105 need not be executed.

Fig. 11 is a sequence diagram illustrating Operation Example (2) of V2X. Blind retransmission, which is not based on the HARQ control, for improving a success rate or a reaching distance of the transmission may be executed.

In Step S201, the terminal 20A autonomously selects the resource that is to be used for PSCCH and PSSCH from the resource selection window having a predetermined period. The resource selection window may be configured in the terminal 20 by the base station 10.

In Step S202 and Step S203, the terminal 20A transmits SCI via PSCCH and/or PSSCH, and transmits the SL data via PSSCH, using the resource autonomously selected in Step S201. For example, the terminal 20A may transmit PSCCH with a time resource that is same as at least a part of the time resource of PSSCH, using a frequency resource adjacent to the frequency resource of PSSCH.

In Step S204, the terminal 20A retransmits SCI via PSCCH and/or PSSCH and the SL data via PSSCH to the terminal 20B by using the resource autonomously selected in Step S201. The retransmission in Step S204 may be executed a plurality of times.

Note that, in a case where the blind retransmission is not executed, Step S204 need not be executed.

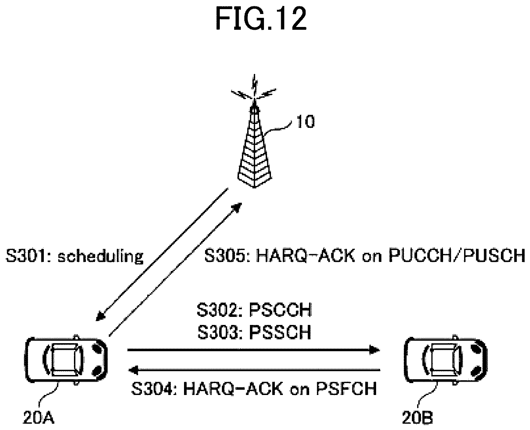

Fig. 12 is a sequence diagram illustrating Operation Example (3) of V2X. The base station 10 may perform the sidelink scheduling. That is, the base station 10 may determine a resource of the sidelink that is used by the terminal 20, and may transmit information indicating the resource to the terminal 20. Further, in a case where the HARQ control with the HARQ feedback is applied, the base station 10 may transmit information indicating the resource of PSFCH to the terminal 20.

In Step S301, the base station 10 sends downlink control information (DCI) to the terminal 20A via PDCCH, thereby performing the SL scheduling. Hereinafter, for convenience sake, DCI for SL scheduling will be referred to as SL scheduling DCI.

In addition, in Step S301, it is expected that the base station 10 also transmits DCI for DL scheduling (may be referred to as DL allocation) to the terminal 20A via PDCCH. Hereinafter, for convenience sake, DCI for DL scheduling will be referred to as DL scheduling DCI. The terminal 20A that has received DL scheduling DCI receives DL data via PDSCH, using a resource that is specified by DL scheduling DCI.

In Step S302 and Step S303, the terminal 20A transmits the sidelink control information (SCI) via PSCCH and/or PSSCH, and transmits the SL data via PSSCH, using the resource specified by SL scheduling DCI. Note that, in SL scheduling DCI, only the resource of PSSCH may be specified. In this case, for example, the terminal 20A may transmit PSCCH with a time resource that is same as at least a part of the time resource of PSSCH, using a frequency resource adjacent to the frequency resource of PSSCH.

The terminal 20B receives SCI (PSCCH and/or PSSCH) and the SL data (PSSCH) transmitted from the terminal 20A. SCI received via PSCCH and/or PSSCH includes information of the resource of PSFCH for the terminal 20B to transmit HARQ-ACK corresponding to the reception of the data.

The information of the resource is included in DL scheduling DCI or SL scheduling DCI that is transmitted from the base station 10 in Step S301, and the terminal 20A acquires the information of the resource from the DL scheduling DCI or the SL scheduling DCI and includes the information in SCI. Alternatively, DCI to be transmitted from the base station 10 need not include the information of the resource, and the terminal 20A may autonomously include the information of the resource in SCI to transmit the information.

In Step S304, the terminal 20B transmits HARQ-ACK corresponding to the received data to the terminal 20A by using the resource of PSFCH determined from the received SCI.

In Step S305, the terminal 20A, for example, transmits HARQ-ACK by using a resource of a physical uplink control channel (PUCCH) specified by DL scheduling DCI (or SL scheduling DCI), and the base station 10 receives HARQ-ACK, at a timing specified by DL scheduling DCI (or SL scheduling DCI) (for example, a timing in slot unit). In the HARQ-ACK codebook, ARQ-ACK that is generated based on HARQ-ACK that is received from the terminal 20B or based on PSFCH that is not received from the terminal 20B, and HARQ-ACK corresponding to the DL data can be included. Here, in a case where there is no allocation of the DL data, HARQ-ACK corresponding to the DL data is not included. In NR Rel.16, in the HARQ-ACK codebook, HARQ-ACK corresponding to the DL data is not included.

Note that, in a case where the HARQ control with the HARQ feedback is not executed, Step S304 and/or Step S305 need not be executed.

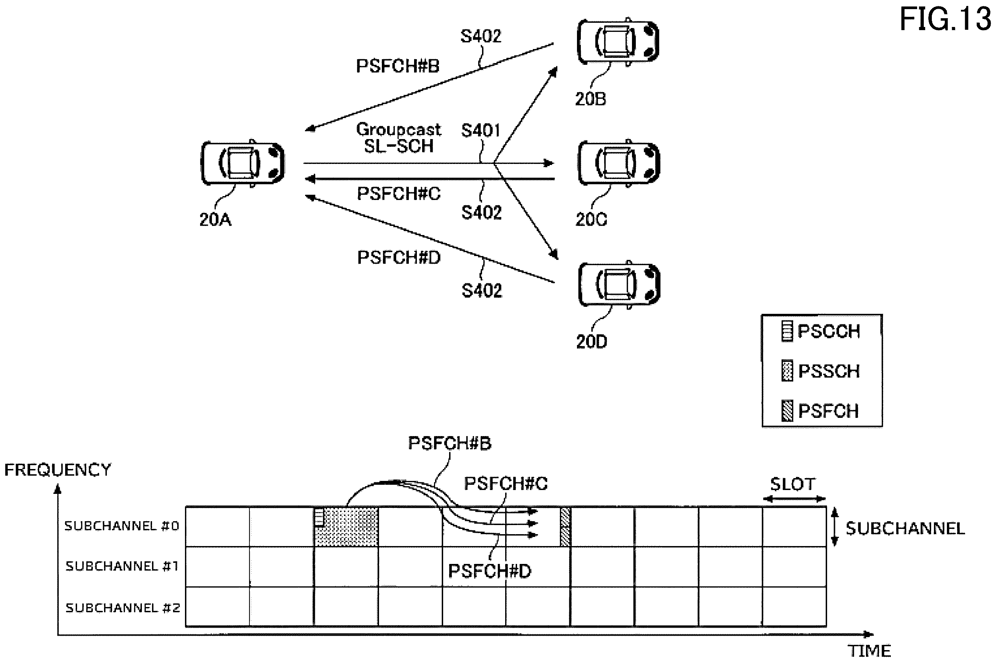

Fig. 13 is a sequence diagram illustrating Operation Example (4) of V2X. As described above, in the sidelink of NR, the HARQ response that is to be transmitted via PSFCH is supported. Note that, as the format of PSFCH, for example, the same format as a physical uplink control channel (PUCCH) format 0 can be used. That is, the format of PSFCH may be a sequence-based format in which a physical resource block (PRB) size is 1, and ACK and NACK are identified by a difference in a sequence and/or a cyclic shift. The format of PSFCH is not limited thereto. The resource of PSFCH may be arranged in a symbol at the end of the slot or in a plurality of symbols at the end of the slot. In addition, whether or not a period N is configured for the PSFCH resource is defined in advance. The period N may be configured in slot unit, or may be defined in advance.

In Fig. 13, the vertical axis corresponds to the frequency domain, and the horizontal axis corresponds to the time domain. PSCCH may be arranged in one symbol at the head of the slot, may be arranged in a plurality of symbols from the head of the slot, or may be arranged in a plurality of symbols from a symbol that is not at the head of the slot. PSFCH may be arranged in one symbol at the end of the slot, or may be arranged in a plurality of symbols at the end of the slot. Note that, with respect to the "head of the slot" and the "end of the slot", described above, the consideration of a symbol for automatic gain control (AGC) and a symbol for switching transmission/reception may be omitted. That is, for example, in a case where one slot includes 14 symbols, the "head of the slot" and the "end of the slot" may indicate a symbol at the head of the slot and a symbol at the end of the slot, respectively, in 12 symbols excluding symbols at the head of the slot and at the end of the slot. In the example illustrated in Fig. 13, three subchannels are configured in the resource pool, and two PSFCHs are arranged in the third slot after a slot in which PSSCH is arranged. An arrow to PSFCH from PSSCH indicates an example of PSFCH that is associated with PSSCH.

In a case where the HARQ response in the groupcast of NR-V2X is a groupcast option 2 for transmitting ACK or NACK, it is necessary to determine a resource that is used in the transmission and reception of PSFCH. As illustrated in Fig. 13, in Step S401, the terminal 20A, which is a transmission side terminal 20, performs groupcast with respect to the terminal 20B, the terminal 20C, and the terminal 20D, which are reception side terminals 20, via SL-SCH. Subsequently, in Step S402, the terminal 20B uses PSFCH#B, the terminal 20C uses PSFCH#C, and the terminal 20D uses PSFCH#D to transmit the HARQ response to the terminal 20A. Here, as illustrated in the example of Fig. 13, in a case where the number of available resources of PSFCH is less than the number of reception side terminals 20 belonging to the group, it is necessary to determine how to allocate the resources of PSFCH. Note that, the transmission side terminal 20 may have the number of reception side terminals 20 in the groupcast. Note that, in a groupcast option 1, only NACK is transmitted as the HARQ response, and ACK is not transmitted.

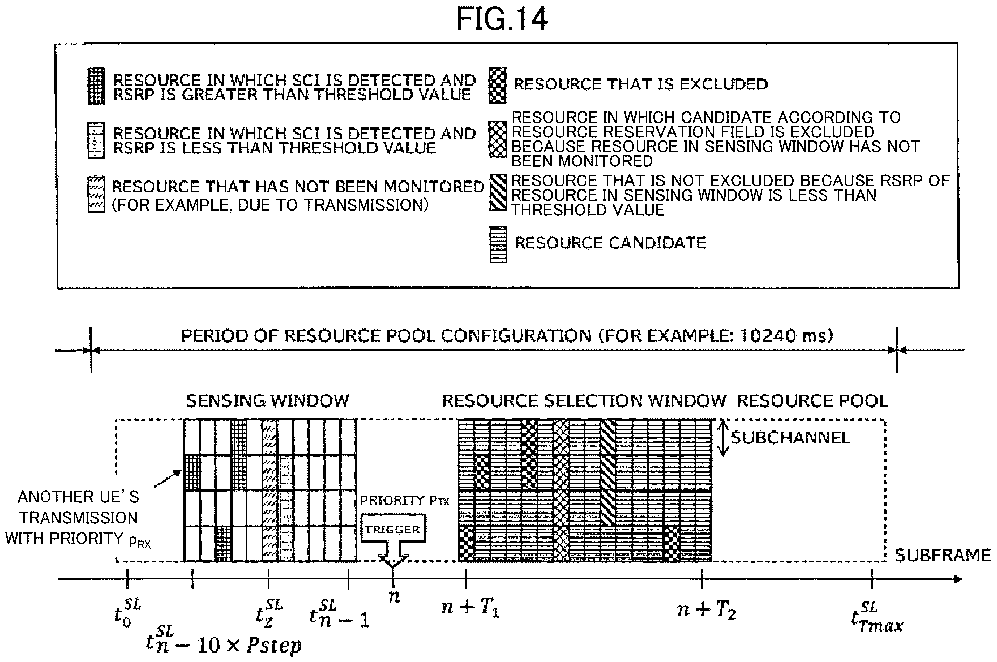

Fig. 14 is a diagram illustrating an example of a sensing operation. In a case where partial sensing is not configured by a higher layer in an LTE sidelink, as illustrated in Fig. 14, the terminal 20 performs transmission by selecting a resource. As illustrated in Fig. 14, the terminal 20 executes sensing in a sensing window in the resource pool. Through the sensing, the terminal 20 receives a resource reservation field that is included in SCI to be transmitted from another terminal 20, and identifies available resource candidates in the resource selection window in the resource pool, based on the field. Subsequently, the terminal 20 randomly selects a resource from the available resource candidates. The resource selection window is a set of resources to be candidates that are used and configured in the resource pool. The resource selection window, for example, may have another name such as configuration related to the resource selection, a target section period for selecting a resource, or the like. The sensing window in LTE may be a section period from a predetermined time point before a trigger, such as packet generation, until immediately before the trigger. Sensing of all resources in the sensing window may be referred to as full sensing. Note that, the sensing window may have another name indicating the section period for performing the sensing.

In addition, as illustrated in Fig. 14, the configuration of the resource pool may have a period. For example, the period may be a period of 10240 milliseconds. Fig. 14 is an example in which subframes from a subframe t₀^{SL} to a subframe t_{Tmax}^{SL} are configured as the resource pool. The domain of the resource pool in the period may be configured by a bitmap, for example.

In addition, as illustrated in Fig. 14, a transmission trigger in the terminal 20 occurs in a subframe n, and the transmission priority is p_{TX}. The terminal 20, for example, is capable of detecting that another terminal 20 performs transmission with a priority p_{RX}, in the sensing window from a subframe t_{n-10×Pstep}^{SL} to a subframe tₙ₋₁^{SL}. In a case where SCI is detected in the sensing window, and reference signal received power (RSRP) is greater than a threshold value, the resource in the resource selection window corresponding to the SCI is excluded. In addition, in a case where SCI is detected in the sensing window, and RSRP is less than the threshold value, the resource in the resource selection window corresponding to the SCI is not excluded. The threshold value, for example, may be a threshold value Th_{pTX, pRX} to be configured or defined for each resource in the sensing window, based on the priority p_{TX} and the priority p_{RX}.

In addition, as with a subframe t_{Z}^{SL} illustrated in Fig. 14, a resource in the resource selection window to be a candidate of resource reservation information corresponding to a resource that has not been monitored, for example, due to transmission, in the sensing window, is excluded.

As illustrated in Fig. 14, in the resource selection window from a subframe n+T₁ to a subframe n+T₂, a resource occupied by another UE is identified, and resources excluding the resource are the available resource candidates. In a case where a set of available resource candidates is denoted as S_{A}, and S_{A} is less than 20% of the resources in the resource selection window, the threshold value Th_{pTX}, _{pRX} that is configured for each resource in the sensing window may be increased by 3dB, and the identification of the resource may be executed again. That is, the threshold value Th_{pTX}, _{pRX} is increased, and the identification of the resource is executed again, and thus, the resources that are not excluded because of RSRP being less than the threshold value may be increased. Further, a received signal strength indicator (RSSI) of each of the resources of S_{A} may be measured, and a resource with the minimum RSSI may be added to a set S_{B}. An operation of adding the resource with the minimum RSSI included in S_{A} to S_{B} may be repeated until the set of resource candidates S_{B} becomes greater than or equal to 20% of the resource selection window.

A lower layer of the terminal 20 may report S_{B} to a higher layer. The higher layer of the terminal 20 may determine a resource to be used, by executing random selection with respect to S_{B}. The terminal 20 may execute sidelink transmission by using the determined resource. Note that, after ensuring the resources, the terminal 20 may periodically use the resources without performing the sensing a predetermined number of times (for example, Cᵣₑₛₑₗ times) .

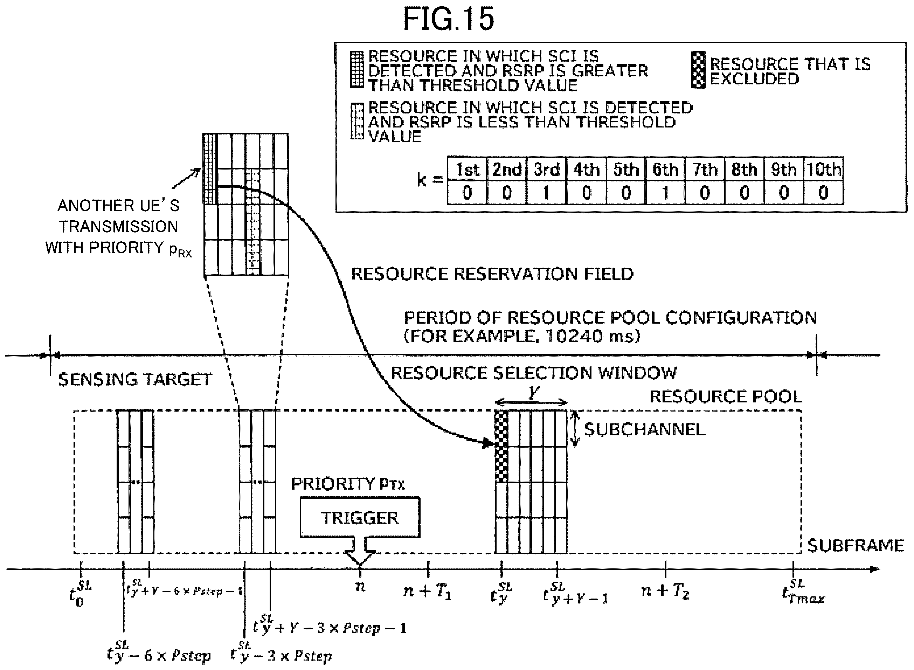

Fig. 15 is a diagram illustrating an example of a partial sensing operation. In a case where the partial sensing is configured by the higher layer in the LTE sidelink, the terminal 20 performs transmission by selecting a resource as illustrated in Fig. 15. As illustrated in Fig. 15, the terminal 20 executes the partial sensing with respect to a part of the sensing window in the resource pool. The resource for which the partial sensing is executed may be referred to as a sensing target, a sensing subframe, or a sensing slot. According to the partial sensing, the terminal 20 receives a resource reservation field that is included in SCI to be transmitted from another terminal 20, and identifies the available resource candidates in the resource selection window in the resource pool, based on the field. Subsequently, the terminal 20 randomly selects a resource from the available resource candidates.

In addition, as illustrated in Fig. 15, the configuration of the resource pool may have a period. For example, the period may be a period of 10240 milliseconds. Fig. 15 is an example in which subframes from the subframe t₀^{SL} to the subframe t_{Tmax}^{SL} are configured as the resource pool. The target domain of the resource pool in the period may be configured by a bitmap, for example.

As illustrated in Fig. 15, the transmission trigger in the terminal 20 occurs in the subframe n, and the transmission priority is p_{TX}. As illustrated in Fig. 15, in subframes from the subframe n+T₁ to the subframe n+T₂, Y subframes from the subframe t_{y}^{SL} to the subframe t_{y+Y-1}^{SL} may be configured as the resource selection window. Further, as illustrated in Fig. 15, the transmission trigger in the terminal 20 occurs in the subframe n, and the transmission priority is p_{TX}.

The terminal 20, for example, is capable of detecting that another terminal 20 performs the transmission with the priority p_{RX}, in one or a plurality of sensing targets with a length of Y subframes from a subframe t_{y-k×PsteP}^{SL} to a subframe t_{y+Y-k×Pstep-1}^{SL}. k, for example, may be a bitmap of 10 bits. In Fig. 15, an example is illustrated in which the third bit and the sixth bit of the bitmap k are configured to "1" indicating that the partial sensing is to be performed. That is, in Fig. 15, subframes from a subframe t_{y-6×Pstep}^{SL} to a subframe t_{y+Y-6×Pstep-1}^{SL} and subframes from a subframe t_{y-3×Pstep}^{SL} to a subframe t_{y+Y-3×Pstep-1}^{SL} are configured as the sensing target. As described above, the i-th bit of the bitmap k may correspond to the sensing target from the subframe t_{y-i×Pstep}^{SL} to the subframe t_{y+Y-i×Pstep-1}^{SL}.

Note that, y is an index in the Y subframes, k is configured or defined in advance by a bitmap of 10 bits, and Pₛₜₑₚ is 100 ms. Here, in a case where SL communication is performed by a DL carrier and a UL carrier, Pₛₜₑₚ is (U/(D + S + U))*100 ms. U corresponds to the number of UL slots, D corresponds to the number of DL slots, and S corresponds to the number of special slots.

In a case where SCI is detected in one or a plurality of sensing targets described above, and RSRP is greater than the threshold value, a resource in the resource selection window corresponding to the resource reservation field of SCI is excluded. In addition, in a case where SCI is detected in the sensing target, and RSRP is less than the threshold value, a resource in the resource selection window corresponding to the resource reservation field of SCI is not excluded. The threshold value, for example, may be the threshold value Th_{pTX, pRX} that is configured or defined for each resource in the sensing window, based on the priority p_{TX} and the priority p_{RX}.

As illustrated in Fig. 15, in the resource selection window where the Y subframes are configured in a section period [n+T₁,n+T₂], the terminal 20 identifies a resource that is occupied by another UE, and resources excluding the resource are the available resource candidate. Note that, the Y subframes need not be contiguous. In a case where the set of available resource candidates is denoted as S_{A}, and S_{A} is less than 20% of the resources in the resource selection window, the threshold value Th_{pTX, pRX} that is configured for each resource in the sensing window may be increased by 3dB, and the identification of the resource may be executed again. That is, the threshold value Th_{pTx, pRX} is increased, and the identification of the resource may be executed again, and thus, the resources that are not excluded because of RSRP being less than the threshold value may be increased. Further, RSSI of each of the resources of S_{A} may be measured, and the resource with the minimum RSSI may be added to the set S_{B}. The operation of adding the resource with the minimum RSSI included in S_{A} to S_{B} may be repeated until the set of resource candidates S_{B} becomes greater than or equal to 20% of the resource selection window.

The lower layer of the terminal 20 may report S_{B} to the higher layer. The higher layer of the terminal 20 may determine the resource to be used, by executing the random selection with respect to S_{B}. The terminal 20 may execute the sidelink transmission by using the determined resource. Note that, after ensuring the resources, the terminal 20 may periodically use the resource without performing the sensing a predetermined number of times (for example, Cᵣₑₛₑₗ times) .

In Fig. 14 and Fig. 15 described above, the operation of the transmission side terminal 20 has been described, and the reception side terminal 20 may detect data transmission from another terminal 20, and may receive data from the other terminal 20, based on the result of the sensing or the partial sensing.

In a NR release 17 sidelink, power saving based on the random resource selection and the partial sensing described above is being discussed. For example, for power saving, the random resource selection and the partial sensing of a sidelink in LTE release 14 may be applied to a resource allocation mode 2 of a NR release 16 sidelink. The terminal 20 to which the partial sensing is applied executes the reception and the sensing only in a specific slot in the sensing window.

In addition, in the NR release 17 sidelink, enhanced Ultra Reliable Low Latency Communication (eURLLC) is being discussed by using terminal-to-terminal coordination (inter-UE coordination) as a base line. For example, the terminal 20A may share information indicating a resource set with the terminal 20B, and the terminal 20B may consider the information in the resource selection for transmission.

For example, a resource reservation periodicity that can be indicated in a resource pool where P2V of LTE is performed, is {100, 200, ..., 1000} ms. The resource pool is a resource pool that is used by a partial sensing UE. Here, because Pₛₜₑₚ is 100 ms, the reservation periodicity is denoted as Pₛₜₑₚ*k. Therefore, with respect to the Y slots of the resource selection window, the reservation is guaranteed to be indicated in t_{y-k×Pstep}^{SL}. Note that, when Pstep is (U/(D + S + U))*100, the reservation periodicity is also similarly adjusted. Hereinafter, the adjustment of Pstep being (U/(D + S + U))*100 will not be explicitly described, but as with LTE, the adjustment can be applied to the embodiment of the invention.

On the other hand, in NR, a reservation periodicity that can be indicated by release 16 UE is {1, 2, ..., 98, 99, 100, 200, ..., 900, 1000} ms. That is, the reservation periodicity can be configured in the unit of 1 ms from 1 ms to 100 ms, and can be configured in the unit of 100 ms from 100 ms to 1000 ms. In a case of applying a partial sensing method of LTE described above, it is necessary that Pₛₜₑₚ is 1 ms, and it is necessary to perform the sensing with respect to an enormous number of resources. Accordingly, a power saving effect decreases.

Therefore, in the resource pool that can be used by the terminal 20 performing a power-saving operation, with respect to a periodic resource reservation based on a predetermined period or a predetermined periodicity, the sensing slot may be determined based on a predetermined method. In this embodiment, the "period" and the "periodicity" may be replaced with each other.

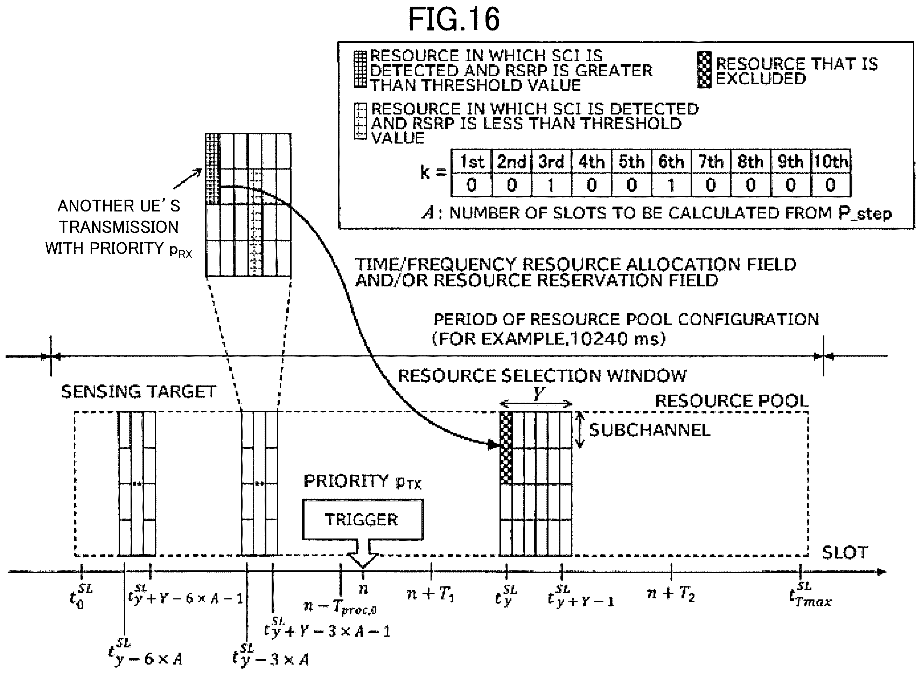

Fig. 16 is a diagram illustrating Example (1) of the sensing operation in the embodiment of the invention. For example, in the resource pool that can be used by the terminal 20 performing the power-saving operation, the value of the periodicity that can be used in the periodic resource reservation may be limited. In addition, a parameter (for example, Pₛₜₑₚ) for determining the sensing slot in the partial sensing may be determined based on the configured periodicity. In addition, for each configured periodicity, the sensing slot may be determined based on different parameters. In addition, for each configured periodicity, only an immediately preceding period may be the sensing target.

Note that, the sensing window in NR may be a section period from a predetermined time point n-T₀, which is located before n of the selection trigger such as packet generation, until immediately before n-T_{proc,0}, which is located before the selection trigger by T_{proc,0} that corresponds to the processing time.

Note that, in a case where the resource selection window includes Y slots, parameters k and Pₛₜₑₚ in the partial sensing illustrated in Fig. 16 may be parameters for determining the sensing slots corresponding to the Y slots. Fig. 16 is an example in which A is calculated from Pₛₜₑₚ, and the sensing slots with Y slot length are determined by using A and k. A may be Pₛₜₑₚ, or may be a value that is calculated based on Pₛₜₑₚ. In addition, as with LTE, the Y slots need not be contiguous. In addition, with respect to a non-periodic resource reservation, that is, a reservation based only on a time/frequency resource allocation field, the corresponding sensing target may be configured separately from the periodic resource reservation.

As described above, in the resource pool that can be used by the terminal 20 performing the power-saving operation, the value of the periodicity that can be used in the periodic resource reservation may be limited. For example, the value of the periodicity may be limited as described in the following 1) to 4).
1) Among {1, 2, ..., 98, 99, 100, 200, ..., 900, 1000} ms, only a value that is greater than or equal to 100 ms can be configured.
2) Among {1, 2, ..., 98, 99, 100, 200, ..., 900, 1000} ms, only a multiple of a specific value X can be configured. For example, when X = 10 ms, {10, 20, ..., 80, 90, 100, 200, ..., 900, 1000} ms may be configured.
3) Among {1, 2, ..., 98, 99, 100, 200, ..., 900, 1000} ms, a part or all of values, of which the greatest common divisor is greater than or equal to Y, can be configured. For example, when Y = 20 ms, {80, 200, 1000} ms may be configured. Note that, Y may be the parameter Y used in Fig. 16.
4) Among {1, 2, ..., 98, 99, 100, 200, ..., 900, 1000} ms, a part or all of values, of which the greatest common divisor with respect to the values multiplied by k is greater than or equal to Y, can be configured. Note that, k and Y may be the parameters k and Y used in Fig. 16.

X and Y may be provided by a higher layer parameter, or may be defined in advance by technical specifications. k may be provided by a higher layer parameter, or may be indicated by a bitmap. In addition, the value of the periodicity that can be used in the periodic resource reservation may vary in accordance with the priority.

As described above, in the resource pool that can be used by the terminal 20 performing the power-saving operation, the value of the periodicity that can be used in the periodic resource reservation is limited, and thus, the sensing target can be limited, and the power saving effect can be improved.

In addition, as described above, the parameter (for example, Pₛₜₑₚ used in Fig. 16) for determining the sensing slot in the partial sensing may be determined based on the periodicity configured in the periodic resource reservation. For example, the parameter may be configured as described in the following 1) to 4).
1) Among the configured periodicities, the minimum value is configured.
2) A value based on parameters (for example, X and Y) for determining the configurable periodicity or sensing slots is configured. For example, Pₛₜₑₚ may be X, and, Y may be the parameter Y used in Fig. 16.
3) The greatest common divisor of configured periodicities is configured. For example, in a case where the periodicities are {80, 200, 1000}, Pₛₜₑₚ may be 40 ms.
4) The greatest common divisor of values obtained by multiplying the configured periodicities by k is configured. For example, in a case where the periodicities are {80, 200, 1000}, and the second bit and the fourth bit of k are 1, the greatest common divisor, 80 ms for {80*2, 80*4, 200*2, 200*4, 1000*2, 1000*4} may be Pₛₜₑₚ. That is, Pₛₜₑₚ may be a product of the greatest common divisor of the configured periodicities and the greatest common divisor of bit numbers among k, the values of the bit numbers being 1.

Note that: a method for limiting the value of the periodicity that can be used in the periodic resource reservation in the resource pool that can be used by the terminal 20 performing the power-saving operation; and a method for determining the parameter for determining the sensing slot in the partial sensing, based on the periodicity configured in the periodic resource reservation, may be combined.

As described above, the sensing target can be configured appropriately by determining the parameter for determining the sensing slot in the partial sensing, based on the periodicity configured in the periodic resource reservation such that the sensing is performed with respect to a slot that is required to be sensed, and such that the sensing is not performed with respect to a slot that is not required to be sensed.

In addition, as described above, for each configured periodicity, the sensing slot may be determined based on different parameters. For example, as described in the following 1) to 4), the sensing slot may be determined.
1) Pₛₜₑₚ is to be configured for each periodicity. Pₛₜₑₚ may be Pₛₜₑₚ used in Fig. 16.
2) k is to be configured for each periodicity. k may be k used in Fig. 16.
3) The periodicities are to be classified into several groups, and Pₛₜₑₚ is to be configured for each group. Further, the method of limiting the value of the periodicity that can be used in the periodic resource reservation in the resource pool that is used by the terminal 20 performing the power-saving operation, or the method of determining the parameter for determining the sensing slot in the partial sensing, based on the periodicity configured in the periodic resource reservation, may be applied for each group.
4) The periodicities are to be classified into several groups, and k is to be configured for each group. Further, the method of limiting the value of the periodicity that can be used in the periodic resource reservation in the resource pool that is used by the terminal 20 performing the power-saving operation, or the method of determining the parameter for determining the sensing slot in the partial sensing, based on the periodicity configured in the periodic resource reservation, may be applied for each group.

As described above, the configurable periodicities can be further increased by determining the sensing slot, based on different parameters for each configured periodicity. In addition, in a case where the greatest common divisor of the configured periodicities is small, the slot that is not required to be sensed can be configured not to be sensed.

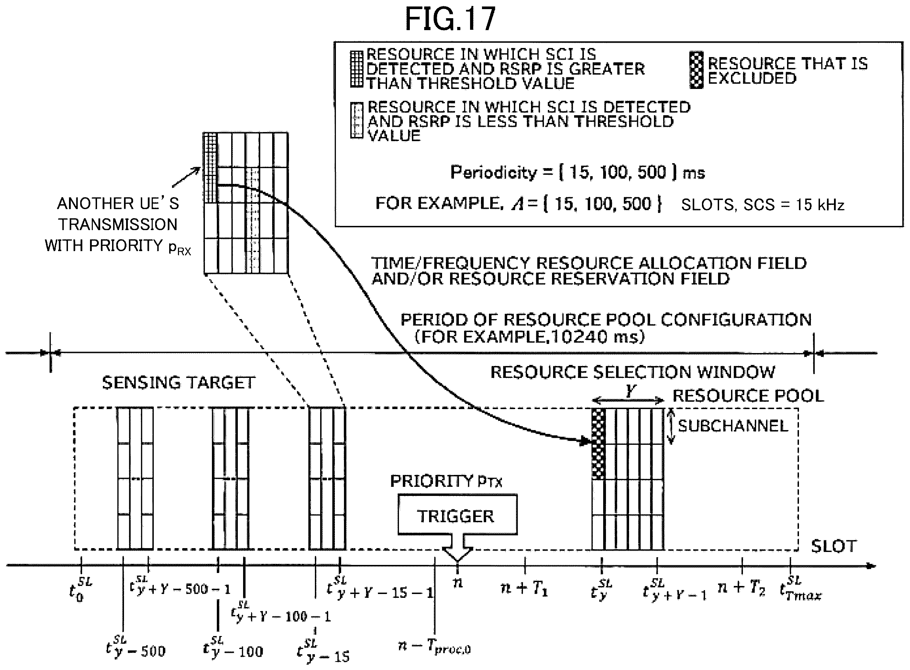

Fig. 17 is a diagram illustrating Example (2) of the sensing operation in the embodiment of the invention. As described above, for each configured periodicity, a section period corresponding only to the immediately preceding period of the resource selection window may be the sensing target. That is, as illustrated in Fig. 17, Pₛₜₑₚ may be each periodicity, and the first bit of k may be 1. In Fig. 17, an example is illustrated in which the periodicity, that is, Pₛₜₑₚ is {15, 100, 500} ms. In this case, A = {15, 100, 500} slots, and SCS may be 15 kHz. As illustrated in Fig. 17, with respect to the sensing target, a section period corresponding to periodicity of 15 ms is a period from t_{y-15}^{SL} to t_{y+Y-15-1}^{SL}, a section period corresponding to periodicity of 100 ms is a period from t_{y-100}^{SL} to t_{y+Y-100-1}^{SL}, and a section period corresponding to periodicity of 500 ms is a period from t_{y-500}^{SL} to t_{y+Y-500-1}^{SL}. Note that, as illustrated in Fig. 17, the corresponding resource selection window is a window from t_{y}^{SL} to t_{y+Y-1}^{SL}.

Further, the transmitting terminal 20A that has reserved a periodic resource by the resource reservation field may continue periodic transmission. For example, in a case where the transmitting terminal 20A stops the periodic transmission, it may be assumed that resources of the next and subsequent periods are not reserved by the transmitting terminal 20A. In addition, in a case where SCI transmitted from the transmitting terminal 20A indicates the reservation of the periodic resource by the resource reservation field, the receiving terminal 20B may assume that the periodic resource is reserved as long as a reservation signal of the periodic resource is received from the transmitting terminal 20A for each periodicity. In addition, in a case where the reservation signal of the periodic resource is not received from the transmitting terminal 20A N times in a row, the receiving terminal 20B may assume that the periodic resource is released (is not reserved thereafter). For example, N may be 1.

Whether a method of setting the section period corresponding only to the immediately preceding period of the resource selection window as the sensing target for each configured periodicity, is to be applied, or a method of setting the section period covering a specific plurality of periods as the sensing target, is to be applied, may be determined in accordance with a specific condition. For example, which method is to be applied may be determined in accordance with a parameter that is configured for each periodicity.

The method of setting only the immediately preceding period of the resource selection window as the sensing target for each configured periodicity, may be freely combined with: the method of limiting the value of the periodicity that can be used in the periodic resource reservation in the resource pool that can be used by the terminal 20 performing the power-saving operation; the method of determining the parameter for determining the sensing slot in the partial sensing, based on the periodicity configured in the periodic resource reservation; and the method of determining the parameter for determining the sensing slot in the partial sensing, based on the period configured in the periodic resource reservation. For example, with respect to some periodicities, the method of setting only the immediately preceding period of the resource selection window as the sensing target for each configured periodicity may be applied, and, with respect to other periodicities: the method of limiting the value of the periodicity that can be used in the periodic resource reservation in the resource pool that can be used by the terminal 20 performing the power-saving operation; the method of determining the parameter for determining the sensing slot in the partial sensing, based on the periodicity configured in the periodic resource reservation; or the method of determining the parameter for determining the sensing slot in the partial sensing, based on the periodicity configured in the periodic resource reservation, may be applied.

As described above, the sensing target can be decreased by setting only the immediately preceding period of the resource selection window as the sensing target for each configured periodicity. In addition, an occurrence probability of a resource collision can be decreased.

Note that, the terminal 20 (power saving UE) that performs the power-saving operation may be one of the following 1) to 4).
1) The terminal 20 configured to perform the partial sensing.
2) The terminal 20 that performs a sensing method different from the full sensing defined in the release 16. Note that, the full sensing may mean sensing all the resources in the sensing window. The sensing window may be defined by a slot section period [n-T₀,n-T_{proc,0}], and n may be a slot corresponding to a packet arrival timing.
3) The terminal 20 that does not perform the sensing. For example, the terminal 20 configured to perform the random resource selection.
4) The terminal 20 that does not perform reception and/or transmission only within a limited time.

Note that, "a case where at least one of the transmission, the reception, and the sensing operation is performed only at a specific timing" may be substituted with "a case where configuration related to the power saving is performed".

Note that, UE or the terminal 20 may be a plurality of UEs or terminals 20, which may belong to the same group.

Among the terminals 20 performing the sidelink communication, some of the terminals 20 may be UE performing the power-saving operation, or all of the terminals 20 may be UE performing the power-saving operation.

The examples described above are not limited to the V2X terminal, and may be applied to terminals that perform D2D communication.

Note that, the terminal 20 may be aware of a timing when the reception of the other terminal 20 can be performed and/or a timing when the transmission of the other terminal 20 can be performed. The terminal 20 may be aware of the timing by the timing being determined by technical specifications or by pre-configuration, or by an indication being received from another terminal 20.

Note that, in the examples described above, the timing, that is, the time resource may be substituted with the frequency resource. The timing may be a period.

According to the examples described above, the terminal 20 can efficiently configure the sensing target, and can increase the power saving effect, by appropriately configuring the sensing target in the partial sensing, based on the resource reservation periodicity.

That is, the transmission of another terminal can be efficiently detected, in the terminal-to-terminal direct communication.

### (Device Structure)

Next, function structure examples of the base station 10 and the terminal 20 that execute the processing and the operation described so far will be described. The base station 10 and the terminal 20 have a function of carrying out the examples described above. Here, each of the base station 10 and the terminal 20 may include only a part of the functions in the examples.

### <Base Station 10>

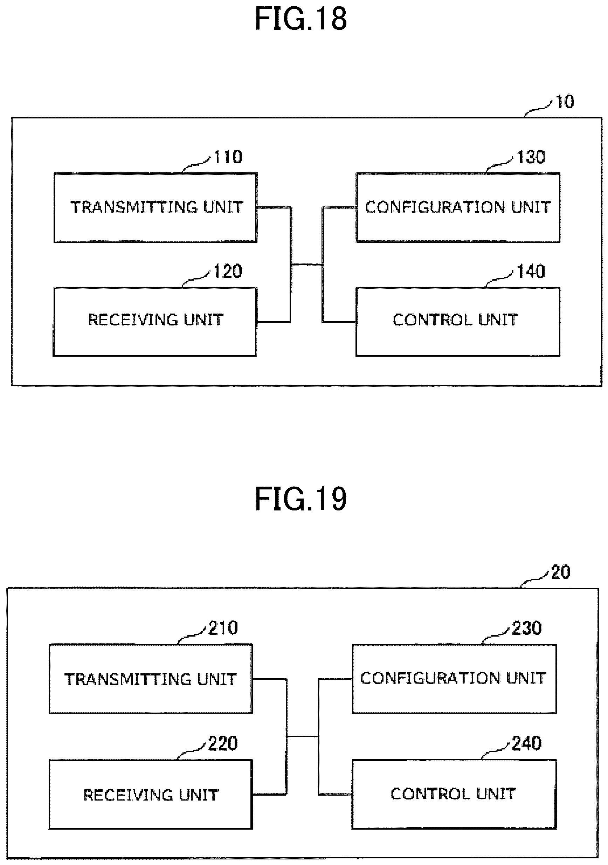

Fig. 18 is a diagram illustrating an example of a function structure of the base station 10. As illustrated in Fig. 18, the base station 10 includes a transmitting unit 110, a receiving unit 120, a configuration unit 130, and a control unit 140. The function structure illustrated in Fig. 18 is merely an example. Function segments and function units may have any name insofar as the operation according to the embodiment of the invention can be executed.

The transmitting unit 110 has a function of generating a signal to be transmitted to the terminal 20 side and of transmitting the signal over the radio. The receiving unit 120 has a function of receiving various signals transmitted from the terminal 20 and of acquiring, for example, information of a higher layer from the received signals. In addition, the transmitting unit 110 has a function of transmitting NR-PSS, NR-SSS, NR-PBCH, a DL/UL control signal, a DL reference signal, and the like to the terminal 20.

The configuration unit 130 stores configuration information that is pre-configured, and various configuration information items that are transmitted to the terminal 20 in a storage unit, and reads out the information from the storage unit, as necessary. The contents of the configuration information, for example, are information according to the configuration of the D2D communication, and the like.

As described in the examples, the control unit 140 performs processing according to configuration for the terminal 20 to perform the D2D communication. In addition, the control unit 140 transmits the scheduling of the D2D communication and DL communication to the terminal 20 through the transmitting unit 110. In addition, the control unit 140 receives information according to the HARQ response of the D2D communication and the DL communication from the terminal 20 through the receiving unit 120. A function unit relevant to the signal transmission in the control unit 140 may be included in the transmitting unit 110, and a function unit relevant to the signal reception in the control unit 140 may be included in the receiving unit 120.

### <Terminal 20>

Fig. 19 is a diagram illustrating an example of a function structure of the terminal 20. As illustrated in Fig. 19, the terminal 20 includes a transmitting unit 210, a receiving unit 220, a configuration unit 230, and a control unit 240. The function structure illustrated in Fig. 19 is merely an example. Function segments and function units may have any name insofar as the operation according to the embodiment of the invention can be executed.

The transmitting unit 210 prepares a transmission signal from the transmission data, and transmits the transmission signal over the radio. The receiving unit 220 receives various signals over the radio, and acquires a signal of a higher layer from the received signal of a physical layer. In addition, the receiving unit 220 has a function of receiving NR-PSS, NR-SSS, NR-PBCH, a DL/UL/SL control signal, a reference signal, and the like to be transmitted from the base station 10. In addition, for example, as the D2D communication, the transmitting unit 210 transmits the physical sidelink control channel (PSCCH), the physical sidelink shared channel (PSSCH), a physical sidelink discovery channel (PSDCH), a physical sidelink broadcast channel (PSBCH), and the like to the other terminal 20, and the receiving unit 220 receives PSCCH, PSSCH, PSDCH, PSBCH, or the like from the other terminal 20.

The configuration unit 230 stores various configuration information items received from the base station 10 or a terminal 20 by the receiving unit 220 in a storage unit, and reads out the information from the storage unit, as necessary. In addition, the configuration unit 230 also stores configuration information that is pre-configured. The contents of the configuration information, for example, are the information according to the configuration of the D2D communication, and the like.

As described in the examples, the control unit 240 controls D2D communication for establishing RRC connection with the other terminal 20. In addition, the control unit 240 performs processing according to the power-saving operation. In addition, the control unit 240 performs processing according to HARQ of the D2D communication and the DL communication. In addition, the control unit 240 transmits the information according to the HARQ response of the D2D communication and the DL communication to the other terminal 20 scheduled from the base station 10 to the base station 10. In addition, the control unit 240 may perform the scheduling of the D2D communication with respect to the other terminal 20. In addition, the control unit 240 may autonomously select a resource to be used in the D2D communication from the resource selection window, based on the sensing result, or may execute the reassessment or the preemption. In addition, the control unit 240 performs processing according to power saving in the transmission and reception of the D2D communication. In addition, the control unit 240 performs processing according to the terminal-to-terminal coordination in the D2D communication. A function unit relevant to the signal transmission in the control unit 240 may be included in the transmitting unit 210, and a function unit relevant to the signal reception in the control unit 240 may be included in the receiving unit 220.

### (Hardware Structure)

The block diagrams (Fig. 18 and Fig. 19) used in the description of the embodiment described above illustrate blocks of function units. Such function blocks (structure parts) are attained by at least one arbitrary combination of hardware and software. In addition, an attainment method of each of the function blocks is not particularly limited. That is, each of the function blocks may be attained by using one device that is physically or logically coupled, by directly or indirectly (for example, in a wired manner, over the radio, or the like) connecting two or more devices that are physically or logically separated and by using such a plurality of devices. The function block may be attained by combining one device described above or a plurality of devices described above with software.

The function includes determining, deciding, judging, calculating, computing, processing, deriving, investigating, looking up, ascertaining, receiving, transmitting, outputting, accessing, resolving, selecting, choosing, establishing, comparing, assuming, expecting, presuming, broadcasting, notifying, communicating, forwarding, configuring, reconfiguring, allocating (mapping), assigning, and the like, but is not limited thereto. For example, a function block (a structure part) that has a transmission function is referred to as the transmitting unit or the transmitter. As described above, the attainment method thereof is not particularly limited.

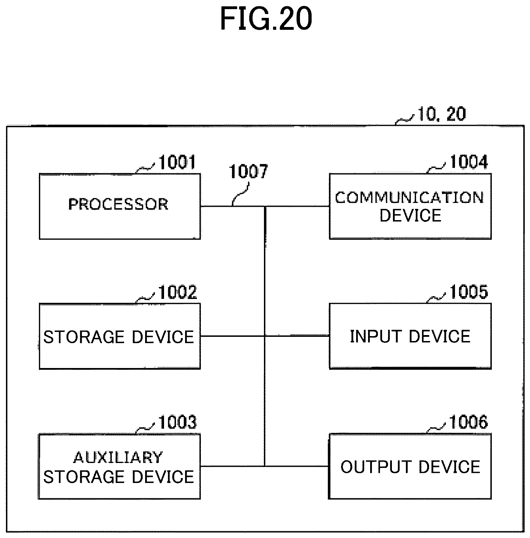

For example, the base station 10, the terminal 20, and the like in one embodiment of this disclosure may function as a computer for performing the processing of a radio communication method of this disclosure. Fig. 20 is a diagram illustrating an example of a hardware structure of the base station 10 and the terminal 20 according to one embodiment of this disclosure. The base station 10 and the terminal 20 described above may be physically structured as a computer device including a processor 1001, a storage device 1002, an auxiliary storage device 1003, a communication device 1004, an input device 1005, an output device 1006, a bus 1007, and the like.

Note that, in the following description, the word "device" can be replaced with a circuit, a device, a unit, or the like. The hardware structure of the base station 10 and the terminal 20 may be structured to include one or a plurality of devices illustrated in the drawings, or may be structured not to include some of the devices.

Each function of the base station 10 and the terminal 20 is attained by reading predetermined software (a program) on hardware such as the processor 1001 and the storage device 1002 such that the processor 1001 performs an operation, and by controlling the communication of the communication device 1004 or by controlling at least one of reading and writing of data in the storage device 1002 and the auxiliary storage device 1003.

The processor 1001, for example, controls the entire computer by operating an operating system. The processor 1001 may be structured by a central processing unit (CPU) including an interface with respect to the peripheral equipment, a control device, an operation device, a register, and the like. For example, the control unit 140, the control unit 240, or the like, described above, may be attained by the processor 1001.

In addition, the processor 1001 reads out a program (a program code), a software module, data, and the like to the storage device 1002 from at least one of the auxiliary storage device 1003 and the communication device 1004, and thus, executes various processes. A program for allowing a computer to execute at least a part of the operations described in the embodiment described above is used as the program. For example, the control unit 140 of the base station 10 illustrated in Fig. 18 may be attained by a control program that is stored in the storage device 1002 and is operated by the processor 1001. In addition, for example, the control unit 240 of the terminal 20 illustrated in Fig. 19 may be attained by a control program that is stored in the storage device 1002 and is operated by the processor 1001. It has been described that the various processes described above are executed by one processor 1001, but the processes may be simultaneously or sequentially executed by two or more processors 1001. The processor 1001 may be implemented on one or more chips. Note that, the program may be transmitted from a network through an electric communication line.

The storage device 1002 is a computer readable recording medium, and for example, may include at least one of a read only memory (ROM), an erasable programmable ROM (EPROM), an electrically erasable programmable ROM (EEPROM), a random access memory (RAM), and the like. The storage device 1002 may be referred to as a register, a cache, a main memory (a main storage unit), and the like. The storage device 1002 is capable of retaining a program (a program code) that can be executed in order to carry out a communication method according to one embodiment of this disclosure, a software module, and the like.

The auxiliary storage device 1003 is a computer readable recording medium, and for example, may include at least one of an optical disc such as a compact disc ROM (CD-ROM), a hard disk drive, a flexible disk, a magnetooptical disk (for example, a compact disc, a digital versatile disk, and a Blu-ray (Registered Trademark) disk), a smart card, a flash memory (for example, a card, a stick, a key drive), a floppy (Registered Trademark) disk, a magnetic strip, and the like. The storage medium described above, for example, may be a database including at least one of the storage device 1002 and the auxiliary storage device 1003, a server, and a suitable medium.

The communication device 1004 is hardware for performing communication with respect to the computer through at least one of a wire network and a radio network (a transmitting and receiving device), and for example, is also referred to as a network device, a network controller, a network card, a communication module, and the like. The communication device 1004, for example, may include a high frequency switch, a duplexer, a filter, a frequency synthesizer, and the like, in order to attain at least one of frequency division duplex (FDD) and time division duplex (TDD). For example, a transmitting and receiving antenna, an amplifier, a transmitting and receiving unit, a transmission path interface, and the like may be attained by the communication device 1004. In the transmitting and receiving unit, the transmitting unit and the receiving unit are implemented by being physically or logically separated.

The input device 1005 is an input device for receiving input from the outside (for example, a keyboard, a mouse, a microphone, a switch, a button, a sensor, and the like). The output device 1006 is an output device for carrying out output with respect to the outside (for example, a display, a speaker, an LED lamp, and the like). Note that, the input device 1005 and the output device 1006 may have an integrated structure (for example, a touch panel).

In addition, each of the devices such as the processor 1001 and the storage device 1002 may be connected by the bus 1007 for communicating information. The bus 1007 may be structured by using a single bus, or may be structured by using buses different for each of the devices.

In addition, the base station 10 and the terminal 20 may include hardware such as a microprocessor, a digital signal processor (DSP), an application specific integrated circuit (ASIC), a programmable logic device (PLD), and a field programmable gate array (FPGA), and a part or all of the respective function blocks may be attained by the hardware. For example, the processor 1001 may be implemented by using at least one of the hardware.

### (Summary of Embodiment)

As described above, according to the embodiment of the invention, a terminal including: a control unit configured to determine a sensing target, based on a resource selection window to be configured in a resource pool and periodicity for reserving resources; a receiving unit configured to detect control information for performing a periodic resource reservation, by sensing the determined sensing target, the control information being transmitted from another terminal; and a transmitting unit configured to transmit control information for performing a periodic resource reservation, by selecting a resource from the resource selection window, based on a result of the sensing, is provided.

According to the structure described above, the terminal 20 can efficiently configure the sensing target, and can increase the power saving effect, by appropriately configuring the sensing target in the partial sensing, based on the resource reservation periodicity. That is, the transmission of another terminal can be efficiently detected, in the terminal-to-terminal direct communication.

The control unit may determine, as the sensing target, a section period corresponding to the periodicity for reserving resources immediately before the resource selection window. According to the structure described above, the terminal 20 can appropriately configure the sensing target in the partial sensing, based on the resource reservation periodicity.

The control unit may limit the periodicity for reserving resources. According to the structure described above, the terminal 20 can increase the power saving effect by limiting the sensing target.

The control unit may configure the periodicity for reserving resources as the greatest common divisor of configurable periodicities. According to the structure described above, the terminal 20 can increase the power saving effect by efficiently limiting the sensing target, in accordance with the resource reservation periodicity to be assumed.

The control unit may determine the sensing target for each of one or more periodicity groups for reserving resources. According to the structure described above, the terminal 20 can increase the power saving effect by limiting the sensing target.

In addition, according to the embodiment of the invention, a communication method for allowing a terminal to execute: determining a sensing target, based on a resource selection window to be configured in a resource pool and periodicity for reserving resources; detecting control information for performing a periodic resource reservation, by sensing the determined sensing target, the control information being transmitted from another terminal; and transmitting control information for performing a periodic resource reservation, by selecting a resource from the resource selection window, based on a result of the sensing, is provided.

According to the structure described above, the terminal 20 can efficiently configure the sensing target, and can increase the power saving effect, by appropriately configuring the sensing target in the partial sensing, based on the resource reservation periodicity. That is, the transmission of another terminal can be efficiently detected, in the terminal-to-terminal direct communication.

### (Supplement to Embodiment)

As described above, the embodiment of the invention has been described, but the disclosed invention is not limited to the embodiment, and a person skilled in the art will understand various modification examples, correction examples, alternative examples, substitution examples, and the like. Specific numerical examples have been described in order to facilitate the understanding of the invention, but the numerical values are merely an example, and any appropriate values may be used, unless otherwise specified. The classification of the items in the above description is not essential to the invention, and the listings described in two or more items may be used by being combined, as necessary, or the listing described in one item may be applied to the listing described in another item (insofar as there is no contradiction). A boundary between the function parts or the processing parts in the function block diagram does not necessarily correspond to a boundary between physical components. The operations of a plurality of function parts may be physically performed by one component, or the operation of one function part may be physically performed by a plurality of components. In a processing procedure described in the embodiment, a processing order may be changed, insofar as there is no contradiction. For the convenience of describing the processing, the base station 10 and the terminal 20 have been described by using a function block diagram, but such a device may be attained by hardware, software, or a combination thereof. Each of software that is operated by a processor of the base station 10 according to the embodiment of the invention and software that is operated by a processor of the terminal 20 according to the embodiment of the invention may be retained in a random access memory (RAM), a flash memory, a read only memory (ROM), an EPROM, an EEPROM, a register, a hard disk (HDD), a removable disk, a CD-ROM, a database, a server, and other suitable recording media.

In addition, the notification of the information is not limited to the aspect/embodiment described in this disclosure, and may be performed by using other methods. For example, the notification of the information may be carried out by physical layer signaling (for example, downlink control information (DCI) and uplink control information (UCI)), higher layer signaling (for example, radio resource control (RRC) signaling, medium access control (MAC) signaling, broadcast information (a master information block (MIB)), a system information block (SIB)), other signals, or a combination thereof. In addition, the RRC signaling may be referred to as a RRC message, and for example, may be a RRC connection setup message, a RRC connection reconfiguration message, and the like.

Each aspect/embodiment described in this disclosure may be applied to at least one of a system using long term evolution (LTE), LTE-advanced (LTE-A), SUPER 3G, IMT-advanced, a 4th generation mobile communication system (4G), a 5th generation mobile communication system (5G), future radio access (FRA), new radio (NR), W-CDMA (Registered Trademark), GSM (Registered Trademark), CDMA2000, an ultra mobile broadband (UMB), IEEE 802.11 (Wi-Fi (Registered Trademark)), IEEE 802.16 (WiMAX (Registered Trademark)), IEEE 802.20, an ultra-wideband (UWB), Bluetooth (Registered Trademark), and other suitable systems and a next-generation system that is expanded on the basis thereof. In addition, a combination of a plurality of systems (for example, a combination of at least one of LTE and LTE-A and 5G, and the like) may be applied.

In the processing procedure, the sequence, the flowchart, and the like of each aspect/embodiment described herein, the order may be changed, insofar as there is no contradiction. For example, regarding the method described in this disclosure, the elements of various steps are presented by using an exemplary order, but are not limited to the presented specific order.

Here, a specific operation that is performed by the base station 10 may be performed by a higher node (upper node), in accordance with a case. In a network provided with one or a plurality of network nodes including the base station 10, it is obvious that various operations that are performed in order for communication with the terminal 20 can be performed by at least one of the base station 10 and a network nodes other than the base station 10 (for example, MME, S-GW, or the like is considered as the network node, but the network node is not limited thereto). In the above description, a case is exemplified in which the number of network nodes other than the base station 10 is 1, but a plurality of other network nodes may be combined (for example, the MME and the S-GW).

The information, the signal, or the like described in this disclosure can be output to the lower layer (or the higher layer) from the higher layer (or the lower layer). The information, the signal, or the like may be input and output through a plurality of network nodes.

The information or the like that is input and output may be retained in a specific location (for example, a memory), or may be managed by using a management table. The information or the like that is input and output can be subjected to overwriting, updating, or editing. The information or the like that is output may be deleted. The information or the like that is input may be transmitted to the other device.

Judgment in this disclosure may be performed by a value represented by 1 bit (0 or 1), may be performed by a truth-value (Boolean: true or false), or may be performed by a numerical comparison (for example, a comparison with a predetermined value).

Regardless of whether the software is referred to as software, firmware, middleware, a microcode, or a hardware description language, or is referred to as other names, the software should be broadly interpreted to indicate a command, a command set, a code, a code segment, a program code, a program, a sub-program, a software module, an application, a software application, a software package, a routine, a sub-routine, an object, an executable file, an execution thread, a procedure, a function, and the like.

In addition, software, a command, information, and the like may be transmitted and received through a transmission medium. For example, in a case where the software is transmitted from a website, a server, or other remote sources by using at least one of a wire technology (a coaxial cable, an optical fiber cable, a twisted pair, a digital subscriber line (DSL), and the like) and a radio technology (an infrared ray, a microwave, and the like), at least one of the wire technology and the radio technology is included in the definition of the transmission medium.

The information, the signal, and the like described in this disclosure may be represented by using any of various different technologies. For example, the data, the instruction, the command, the information, the signal, the bit, the symbol, the chip, and the like that can be referred to through the entire description described above may be represented by a voltage, a current, an electromagnetic wave, a magnetic field or magnetic particles, an optical field or a photon, or an arbitrary combination thereof.

Note that, the terms described in this disclosure and the terms necessary for understanding this disclosure may be replaced with terms having the same or similar meaning. For example, at least one of the channel and the symbol may be a signal (signaling). In addition, the signal may be a message. In addition, a component carrier (CC) may be referred to as a carrier frequency, a cell, a frequency carrier, and the like.

The terms "system" and "network" used in this disclosure are interchangeably used.

In addition, the information, the parameter, and the like described in this disclosure may be represented by using an absolute value, may be represented by using a relative value from a predetermined value, or may be represented by using another corresponding information. For example, a radio resource may be indicated by an index.

The names used in the parameters described above are not limited in any respect. Further, expressions or the like using such parameters may be different from those explicitly disclosed in this disclosure. Various channels (for example, PUCCH, PDCCH, and the like) and information elements can be identified by any suitable name, and thus, various names that are allocated to such various channels and information elements are not a limited name in any respect.

In this disclosure, the terms "base station (BS)", "radio base station", "base station", "fixed station", "NodeB", "eNodeB (eNB)", "gNodeB (gNB)", "access point", "transmission point", "reception point", "transmission and reception point", "cell", "sector", "cell group", "carrier", "component carrier", and the like can be interchangeably used. The base station may be referred to by a term such as a macrocell, a small cell, a femtocell, and a picocell.

The base station is capable of accommodating one or a plurality of (for example, three) cells. In a case where the base station accommodates a plurality of cells, the entire coverage area of the base station can be classified into a plurality of small areas, and each of the small areas is capable of providing communication service by a base station sub-system (for example, an indoor type small base station (a remote radio head (RRH)). The term "cell" or "sector" indicates a part of the coverage area or the entire coverage area of at least one of the base station and the base station sub-system that perform the communication service in the coverage.

In this disclosure, the terms "mobile station (MS)", "user terminal", "user equipment (UE)", and "terminal" can be interchangeably used.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or other suitable terms, by a person skilled in the art.

At least one of the base station and the mobile station may be referred to as a transmitting device, a receiving device, a communication unit, and the like. Note that, at least one of the base station and the mobile station may be a device that is mounted on a mobile object, the mobile object itself, or the like. The mobile object may be a vehicle (for example, a car, an airplane, and the like), may be a mobile object that is moved in an unmanned state (for example, a drone, an autonomous driving car, and the like), or may be a (manned or unmanned) robot. Note that, at least one of the base station and the mobile station also includes a device that is not necessarily moved in a communication operation. For example, at least one of the base station and the mobile station may be an internet of things (IoT) device such as a sensor.

In addition, the base station in this disclosure may be replaced with the user terminal. For example, each aspect/embodiment of this disclosure may be applied to a structure in which communication between the base station and the user terminal is replaced with communication between a plurality of terminals 20 (for example, may be referred to as device-to-device (D2D), vehicle-to-everything (V2X), and the like). In this case, the function of the base station 10 described above may be provided in the terminal 20. In addition, the words "up", "down", and the like may be replaced with words corresponding to the terminal-to-terminal communication (for example, "side"). For example, an up channel, a down channel, and the like may be replaced with a side channel.

Similarly, the user terminal in this disclosure may be replaced with the base station. In this case, the function of the user terminal described above may be provided in the base station.

The terms "determining" and "deciding" used in this disclosure may involve diverse operations. "Determining" and "deciding", for example, are capable of including "determining" and "deciding" with respect to judging, calculating, computing, processing, deriving, investigating, looking up (search, inquiry) (for example, looking up in a table, a database, or another data structure), and ascertaining, and the like. In addition, "determining" and "deciding" are capable of including "determining" and "deciding" with respect to receiving (for example, receiving information), transmitting (for example, transmitting information), input, output, and accessing (for example, accessing data in a memory), and the like. In addition, "determining" and "deciding" are capable of including "determining" and "deciding" with respect to resolving, selecting, choosing, establishing, comparing, and the like. That is, "determining" and "deciding" are capable of including "determining" and "deciding" with respect to any operation. In addition, "determining (deciding)" may be replaced with "assuming", "expecting", "considering", and the like.

The terms "connected" and "coupled", or any modification thereof indicate any direct or indirect connection or couple between two or more elements, and are capable of including a case where there are one or more intermediate elements between two elements that are "connected" or "coupled" to each other. The couple or connection between the elements may be physical couple or connection, may be logical couple or connection, or may be a combination thereof. For example, the "connection" may be replaced with "access". In a case of being used in this disclosure, it is possible to consider that two elements are "connected" or "coupled" to each other by using at least one of one or more electric wires, cables, and print electric connection, and as some non-limiting and non-inclusive examples, by using electromagnetic energy having a wavelength of a radio frequency domain, a microwave domain, and an optical (visible and invisible) domain, and the like.

The reference signal can also be abbreviated as RS, and may be referred to as pilot based on a standard to be applied.

The description "based on" that is used in this disclosure does not indicate "only based on", unless otherwise specified. In other words, the description "based on" indicates both "only based on" and "at least based on".

Any reference to elements using the designations "first," "second," and the like, used in this disclosure, does not generally limit the amount or the order of such elements. Such designations can be used in this disclosure as a convenient method for discriminating two or more elements. Therefore, a reference to a first element and a second element does not indicate that only two elements can be adopted or the first element necessarily precedes the second element in any manner.

"Means" in the structure of each of the devices described above may be replaced with a "unit", a "circuit", a "device", and the like.

In this disclosure, in a case where "include", "including", and the modification thereof are used, such terms are intended to be inclusive, as with the term "comprising". Further, the term "or" that is used in this disclosure is not intended to be exclusive-OR.

A radio frame may include one or a plurality of frames in a time domain. Each of one or a plurality of frames in the time domain may be referred to as a subframe. The subframe may further include one or a plurality of slots in the time domain. The subframe may be a fixed time length (for example, 1 ms) that does not depend on numerology.

The numerology may be a communication parameter to be applied to at least one of the transmission and the reception of a certain signal or channel. The numerology, for example, may indicate at least one of subcarrier spacing (SCS), a bandwidth, a symbol length, a cyclic prefix length, a transmission time interval (TTI), the number of symbols per TTI, a radio frame structure, specific filtering processing that is performed by the transceiver in a frequency domain, specific windowing processing that is performed by the transceiver in a time domain, and the like.

The slot may include one or a plurality of symbols (an orthogonal frequency division multiplexing (OFDM) symbol, a single carrier frequency division multiple access (SC-FDMA) symbol, and the like) in a time domain. The slot may be time unit based on the numerology.

The slot may include a plurality of mini slots. Each of the mini slots may include one or a plurality of symbols in the time domain. In addition, the mini slot may be referred to as a subslot. The mini slot may include symbols of which the number is less than that of the slots. PDSCH (or PUSCH) to be transmitted in a time unit greater than the mini slot may be referred to as a PDSCH (or PUSCH) mapping type A. PDSCH (or PUSCH) to be transmitted by using the mini slot may be referred to as a PDSCH (or PUSCH) mapping type B.

All of the radio frame, the subframe, the slot, the mini slot, and the symbol represent a time unit when transmitting a signal. Other designations respectively corresponding to the radio frame, the subframe, the slot, the mini slot, and the symbol may be used.

For example, one subframe may be referred to as a transmission time interval (TTI), a plurality of consecutive subframes may be referred to as TTI, or one slot or one mini slot may be referred to as TTI. That is, at least one of the subframe and TTI may be a subframe (1 ms) in the conventional LTE, may be a period shorter than 1 ms (for example, 1 to 13 symbols), or may be a period longer than 1 ms. Note that, a unit representing TTI may be referred to as a slot, a mini slot, and the like, but not a subframe.

Here, TTI, for example, indicates a minimum time unit of scheduling in radio communication. For example, in a LTE system, the base station performs scheduling for allocating a radio resource (a frequency bandwidth, transmission power, and the like, which can be used in each of the terminals 20) in a TTI unit, with respect to each of the terminals 20. Note that, the definition of TTI is not limited thereto.

TTI may be a transmission time unit of a data packet (a transport block), a code block, a codeword, and the like, which are subjected to channel coding, or may be a processing unit of scheduling, link adaptation, and the like. Note that, when TTI is applied, a time zone in which the transport block, the code block, the codeword, and the like are actually mapped (for example, the number of symbols) may be shorter than TTI.

Note that, in a case where one slot or one mini slot is referred to as TTI, one or more TTIs (that is, one or more slots or one or more mini slots) may be the minimum time unit of the scheduling. In addition, the number of slots (the number of mini slots) structuring the minimum time unit of the scheduling may be controlled.

TTI having a time length of 1 ms may be referred to as a common TTI (TTI in LTE Rel.8-12), a normal TTI, a long TTI, a common subframe, a normal subframe, a long subframe, a slot, and the like. TTI shorter than the common TTI may be referred to as a shortened TTI, a short TTI, a partial TTI (or a fractional TTI), a shortened subframe, a short subframe, a mini slot, a subslot, a slot, and the like.

Note that, the long TTI (for example, the common TTI, the subframe, and the like) may be replaced with TTI having a time length of longer than or equal to 1 ms, and the short TTI (for example, the shortened TTI and the like) may be replaced with TTI having a TTI length of shorter than a TTI length of the long TTI and longer than or equal to 1 ms.

The resource block (RB) is resource allocation unit of the time domain and the frequency domain, and may include one or a plurality of consecutive subcarriers in the frequency domain. The number of subcarriers included in RB may be the same regardless of the numerology, or for example, may be 12. The number of subcarriers included in RB may be decided based on the numerology.

In addition, the time domain of RB may include one or a plurality of symbols, or may be the length of one slot, one mini slot, one subframe, or one TTI. One TTI, one subframe, and the like may respectively include one or a plurality of resource blocks.

Note that, one or a plurality of RBs may be referred to as a physical resource block (physical RB: PRB), a sub-carrier group (SCG), a resource element group (REG), a PRB pair, a RB pair, and the like.

In addition, the resource block may include one or a plurality of resource elements (RE). For example, one RE may be a radio resource domain of one subcarrier and one symbol.

A bandwidth part (BWP) (may be referred to as a partial bandwidth or the like) may represent a subset of consecutive common resource blocks (common RBs) for certain numerology, in a certain carrier. Here, the common RB may be specified by an index of RB based on a common reference point of the carrier. PRB may be defined by a certain BWP, and may be numbered within BWP.

BWP may include BWP for UL (UL BWP) and BWP for DL (DL BWP). Regarding the terminal 20, one or a plurality of BWPs may be configured within one carrier.

At least one of the configured BWPs may be active, and it may not be assumed that the terminal 20 transmits and receives a predetermined signal/channel out of the active BWP. Note that, the "cell", the "carrier", and the like in this disclosure may be replaced with "BWP".

The structure of the radio frame, the subframe, the slot, the mini slot, the symbol, and the like, described above, is merely an example. For example, the structure of the number of subframes included in the radio frame, the number of slots per a subframe or a radio frame, the number of mini slots included in the slot, the number of symbols and RBs included in the slot or a mini slot, the number of subcarriers included in RB, the number of symbols in TTI, a symbol length, a cyclic prefix (CP) length, and the like can be variously changed.

In this disclosure, for example, in a case where articles such as a, an, and the are added by translation, this disclosure may include a case where nouns following the articles are in the plural.

In this disclosure, the term "A and B are different" may indicate "A and B are different from each other". Note that, the term may indicate "A and B are respectively different from C". The terms "separated", "coupled", and the like may be interpreted as with "being different".

Each aspect/embodiment described in this disclosure may be independently used, may be used by being combined, or may be used by being switched in accordance with execution. In addition, the notification of predetermined information (for example, the notification of "being X") is not limited to being performed explicitly, and may be performed implicitly (for example, the notification of the predetermined information is not performed).

Note that, in this disclosure, SCI is an example of the control information.

### EXPLANATIONS OF LETTERS OR NUMERALS

- 10: BASE STATION
- 110: TRANSMITTING UNIT
- 120: RECEIVING UNIT
- 130: CONFIGURATION UNIT
- 140: CONTROL UNIT
- 20: TERMINAL
- 210: TRANSMITTING UNIT
- 220: RECEIVING UNIT
- 230: CONFIGURATION UNIT
- 240: CONTROL UNIT
- 1001: PROCESSOR
- 1002: STORAGE DEVICE
- 1003: AUXILIARY STORAGE DEVICE
- 1004: COMMUNICATION DEVICE
- 1005: INPUT DEVICE
- 1006: OUTPUT DEVICE

## Claims

1. A terminal (20) comprising:
a control unit (240) configured to determine, based on one or more candidate slots, the one or more candidate slots being a target of resource selection, and a periodicity configured for the terminal (20), a most recent time interval corresponding to the periodicity prior to the one or more candidate slots or a plurality of time intervals corresponding to the periodicity prior to the one or more candidate slots as a target of partial sensing, and to select a resource from among the one or more candidate slots based on a result of the partial sensing in the determined time interval; and
a transmitting unit (210) configured to transmit at least one of a control channel or a shared channel for a communication between terminals by using the selected resource.

2. The terminal (20) according to claim 1,
wherein the control unit (240) is configured to determine, based on a specific parameter, the most recent time interval corresponding to the periodicity prior to the one or more candidate slots or the plurality of time intervals corresponding to the periodicity prior to the one or more candidate slots, as the target of partial sensing.

3. The terminal (20) according to claim 1 or 2,
wherein the periodicity is obtained by limiting, by using a higher layer parameter, values of a periodicity usable for periodic resource reservation.

4. The terminal (20) according to any one of claims 1 to 3, further comprising:
a receiving unit (220) configured to detect control information transmitted from another terminal by the partial sensing in the determined time interval.

5. A communication method for allowing a terminal (20) to execute:
determining, based on one or more candidate slots, the one or more candidate slots being a target of resource selection, and a periodicity configured for the terminal (20), a most recent time interval corresponding to the periodicity prior to the one or more candidate slots or a plurality of time intervals corresponding to the periodicity prior to the one or more candidate slots as a target of partial sensing
selecting a resource from among the one or more candidate slots based on a result of the partial sensing in the determined time interval; and
transmitting at least one of a control channel or a shared channel for a communication between terminals by using the selected resource.

## Patentansprüche

1. Endgerät (20), umfassend:
eine Steuereinheit (240), dazu ausgebildet, basierend auf einem oder mehreren Kandidaten-Slots, wobei der eine oder die mehreren Kandidaten-Slots ein Ziel der Ressourcenauswahl sind, und einer für das Endgerät (20) ausgebildeten Periodizität ein zeitlich letztes Zeitintervall, das der Periodizität vor dem einen oder den mehreren Kandidaten-Slots entspricht, oder eine Vielzahl von Zeitintervallen, die der Periodizität vor dem einen oder den mehreren Kandidaten-Slots entsprechen, als Ziel der partiellen Erfassung zu bestimmen, und, basierend auf einem Ergebnis der partiellen Erfassung in dem bestimmten Zeitintervall, eine Ressource aus dem einen oder den mehreren Kandidaten-Slots auszuwählen; und
eine Sendeeinheit (210), dazu ausgebildet, mindestens einen von einem Steuerkanal oder einem gemeinsam genutzten Kanal für eine Kommunikation zwischen Endgeräten unter Verwendung der ausgewählten Ressource zu übertragen.

2. Endgerät (20) nach Anspruch 1,
wobei die Steuereinheit (240) dazu ausgebildet ist, basierend auf einem spezifischen Parameter, das zeitlich letzte Zeitintervall, das der Periodizität vor dem einen oder den mehreren Kandidaten-Slots entspricht, oder die Vielzahl von Zeitintervallen, die der Periodizität vor dem einen oder den mehreren Kandidaten-Slots entsprechen, als das Ziel der partiellen Erfassung zu bestimmen.

3. Endgerät (20) nach Anspruch 1 oder 2,
wobei die Periodizität durch Begrenzen, unter Verwendung eines Higher-Layer-Parameters, von Werten einer für periodische Ressourcenreservierung verwendbaren Periodizität erhalten wird.

4. Endgerät (20) nach einem der Ansprüche 1 bis 3, weiter umfassend:
eine Empfangseinheit (220), dazu ausgebildet, Steuerinformationen, die von einem anderen Endgerät übertragen werden, mittels der partiellen Erfassung in dem bestimmten Zeitintervall zu detektieren.

5. Kommunikationsverfahren zum Ermöglichen, dass ein Endgerät (20) Folgendes ausführt:
Bestimmen, basierend auf einem oder mehreren Kandidaten-Slots, wobei der eine oder die mehreren Kandidaten-Slots ein Ziel der Ressourcenauswahl sind, und einer für das Endgerät (20) ausgebildeten Periodizität, eines zeitlich letzten Zeitintervalls, das der Periodizität vor dem einen oder den mehreren Kandidaten-Slots entspricht, oder einer Vielzahl von Zeitintervallen, die der Periodizität vor dem einen oder den mehreren Kandidaten-Slots entsprechen, als Ziel der partiellen Erfassung
Auswählen einer Ressource aus dem einen oder den mehreren Kandidaten-Slots, basierend auf einem Ergebnis der partiellen Erfassung in dem bestimmten Zeitintervall;
und
Übertragen mindestens eines von einem Steuerkanal oder einem gemeinsam genutzten Kanal für eine Kommunikation zwischen Endgeräten unter Verwendung der ausgewählten Ressource.

## Revendications

1. Terminal (20) comprenant :
une unité de commande (240) configurée pour déterminer, sur la base d'un ou plusieurs créneaux candidats, les un ou plusieurs créneaux candidats étant une cible d'une sélection de ressources, et d'une périodicité configurée pour le terminal (20), un intervalle de temps le plus récent correspondant à la périodicité avant les un ou plusieurs créneaux candidats ou une pluralité d'intervalles de temps correspondant à la périodicité avant les un ou plusieurs créneaux candidats comme une cible de détection partielle, et pour sélectionner une ressource parmi les un ou plusieurs créneaux candidats sur la base d'un résultat de la détection partielle dans l'intervalle de temps déterminé ; et
une unité de transmission (210) configurée pour transmettre au moins l'un parmi un canal de commande ou un canal partagé pour une communication entre des terminaux en utilisant la ressource sélectionnée.

2. Terminal (20) selon la revendication 1,
dans lequel l'unité de commande (240) est configurée pour déterminer, sur la base d'un paramètre spécifique, l'intervalle de temps le plus récent correspondant à la périodicité avant les un ou plusieurs créneaux candidats ou la pluralité d'intervalles de temps correspondant à la périodicité avant les un ou plusieurs créneaux candidats, comme la cible d'une détection partielle.

3. Terminal (20) selon la revendication 1 ou la revendication 2,
dans lequel la périodicité est obtenue par la limitation, en utilisant un paramètre de couche supérieure, de valeurs d'une périodicité utilisable pour une réservation périodique de ressources.

4. Terminal (20) selon l'une quelconque des revendications 1 à 3, comprenant en outre :
une unité de réception (220) configurée pour détecter des informations de commande transmises en provenance d'un autre terminal par la détection partielle dans l'intervalle de temps déterminé.

5. Procédé de communication pour permettre à un terminal (20) de mettre en œuvre :
la détermination, sur la base d'un ou plusieurs créneaux candidats, les un ou plusieurs créneaux candidats étant une cible d'une sélection de ressources, et d'une périodicité configurée pour le terminal (20), d'un intervalle de temps le plus récent correspondant à la périodicité avant les un ou plusieurs créneaux candidats ou d'une pluralité d'intervalles de temps correspondant à la périodicité avant les un ou plusieurs créneaux candidats comme cible d'une détection partielle
la sélection d'une ressource parmi les un ou plusieurs créneaux candidats sur la base d'un résultat de la détection partielle dans l'intervalle de temps déterminé ; et
la transmission d'au moins l'un parmi un canal de commande ou un canal partagé pour une communication entre des terminaux en utilisant la ressource sélectionnée.
